# EUROPEAN PATENT SPECIFICATION

(11) **EP 4 386 531 B1**
(45) Date of publication and mention of the grant of the patent: **24.12.2025**
(21) Application number: 22952948.2
(22) Date of filing: 29.12.2022
(51) Int. Cl.: G06F 3/0481, G06F 9/451, G06F 3/0483, G06F 3/0488, G06F 3/04883, G06F 3/04886, G06F 3/04817, G06F 3/04842, G06F 3/0486

(54) **CARD DISPLAY METHOD AND TERMINAL DEVICE**
KARTENANZEIGEVERFAHREN UND ENDGERÄTEVORRICHTUNG
PROCÉDÉ D'AFFICHAGE DE CARTE ET APPAREIL

(30) Priority: 26.07.2022 CN 202210881397
(43) Date of publication of application: 19.06.2024
(73) Proprietor: Honor Device Co., Ltd., Shenzhen, Guangdong 518040 (CN)
(72) Inventor: REN, Jie, Shenzhen, Guangdong 518040 (CN); JIAO, Junting, Shenzhen, Guangdong 518040 (CN); HUANG, Liwei, Shenzhen, Guangdong 518040 (CN)
(74) Representative: Isarpatent
(86) International application number: PCT/CN2022/143238
(87) International publication number: WO 2024/021519

(56) References cited:
- WO-A1-2022/068862
- AU-A1- 2022 203 104
- CN-A- 112 148 174
- CN-A- 112 241 867
- CN-A- 113 515 227
- CN-A- 114 065 312
- CN-A- 114 968 018
- US-A1- 2020 379 610

## Description

This application claims priority to Chinese Patent Application No. 202210881397.4, filed with the China National Intellectual Property Administration on July 26, 2022 and entitled "CARD DISPLAY METHOD AND TERMINAL DEVICE", which is incorporated herein by reference in its entirety.

### TECHNICAL FIELD

This application relates to the field of electronic technologies, and in particular, to a card display method and a terminal device.

### BACKGROUND

Messages such as a new reminder or a notification message always appear in various applications (application, APP) installed on a terminal device. A means used by a user to view these notification messages and reminders is relatively simple, and is generally: viewing by using a leftmost home screen of the terminal device or viewing by tapping to enter a specific APP.

Appearance of a service card enriches ways used by the user to view messages such as APP notification messages and reminders. A card is a new message display technology, and is now widely applied to various terminal devices, to provide rich information display and meet a user requirement. However, currently, a manner of setting an APP application as a card is relatively cumbersome, and affects user experience. In addition, one card can display information about only one APP.

AU 2022 203 104 A1 discloses a communication device wherein an icon is dragged to a widget size before being stacked to other widget applications.

### SUMMARY

This application relates to the field of electronic technologies, and in particular, to a card display method and a terminal device. In the card display method in this application, after a user adds a card of a first application to a desktop of an electronic device, the card of the first application is displayed on the desktop of the electronic device, and the user may drag an icon or a card of another application to a display region corresponding to the card of the first application and hover for specified duration, to add the card of the another application. In this method, after adding a card of an application, the user only needs to drag an icon or a card of another application to a card display region corresponding to the application, to add the another application as a card, thereby eliminating a series of operations performed through system settings each time a card is added, and improving user experience.

Solutions of this application are described below.

According to a first aspect, this application provides a card display method, applied to an electronic device. The method includes: displaying a first card of a first application in a first display region of the electronic device; detecting a generation instruction for generating a second card of a second application; and using the first display region as a display region for both the second card of the second application and the first card of the first application.

In some implementations, the first application may be an application such as a video application, a note-taking application, or a food ordering application in the following descriptions. The second application is different from the first application. In some implementations, the electronic device may be a terminal device such as a smartphone or a tablet computer. This is not limited in this application.

In other words, the first card of the first application is displayed in the first display region, and then, after detecting the generation instruction for generating the second card of the second application, the electronic device uses a display region of the first card of the first application as the display region for both the second card of the second application and the first card of the first application. In addition, the second card of the second application does not separately occupy space of a desktop of the electronic device, but is displayed in the first display region together with the first card of the first application.

In some implementations, after the second card of the second application is generated, the first card of the first application may alternatively still be displayed in the first display region. In some implementations, after the second card of the second application is generated, the second card of the second application may be displayed in the first display region, that is, the second card covers the first card for display. This is not limited in this application.

In this manner, a newly-added card of an application does not occupy the space of the desktop of the electronic device, and does not apply a layout of the desktop of the electronic device, and further does not affect user experience.

With reference to the first aspect, in a possible implementation of the first aspect, the method further includes: detecting the generation instruction for generating the second card of the second application, and displaying the second card in the first display region, where the second card covers the first card for display.

With reference to the first aspect and the foregoing possible implementations, in a possible implementation, the first card is displayed in the first display region in a first display size, and a size of the first display region is the same as the first display size; and the method further includes: detecting the generation instruction for generating the second card of the second application; obtaining card data of the second card, where the card data of the second card includes at least one display size corresponding to the second card; determining whether the at least one display size of the second card includes the first display size; and if the at least one display size of the card of the second application includes the first display size, displaying the second card of the second application in the first display region in the first display size.

It may be understood that a card of each application has a display size supported by the card, for example, 1000 pixels × 500 pixels, and 500 pixels × 500 pixels. Therefore, the electronic device displays the card in the display size supported by the card.

Therefore, in some implementations, the first card is displayed in the first display region in the first display size supported by the first card, and the size of the first display region is the same as the first display size. Then, when detecting the generation instruction for generating the second card of the second application, the electronic device obtains the card data of the second card, to obtain the at least one display size supported by the second card. Then, it is determined whether the at least one display size supported by the second card includes the first display size, that is, it is determined whether the second card can be displayed in the first display size. If the second card can be displayed in the first display size, the card of the second application is displayed in the first display region in the first display size. It may be understood that in this case, the second card of the second application covers the first card of the first application for display.

With reference to the first aspect and the foregoing possible implementations, in a possible implementation, there is correspondingly a first control in the first display region, and the first control is configured to control, according to a user instruction, to switch a card displayed in the first display region.

In other words, to facilitate selection, by the user based on a requirement of the user, of the card displayed in the first display region, there is correspondingly the first control in the first display region, and the user may control, by using the first control, to switch the card displayed in the first display region. For example, if the user wants to view the first card of the first application, the user may select, by using the first control, the card of the first application for display.

With reference to the first aspect and the foregoing possible implementations, in a possible implementation, the method further includes: detecting the instruction for generating the second card of the second application; determining whether a quantity of cards included in the first display region exceeds a preset quantity; and if the quantity of cards included in the first display region is less than the preset quantity, using the first display region as the display region for both the second card of the second application and the first card of the first application.

It may be understood that, an excessively large quantity of cards included in the first display region are unfavorable to viewing a card of a corresponding application by the user. Therefore, in some implementations, it is necessary to set an upper limit for a quantity of cards that can be accommodated in the first display region. To be specific, after detecting the instruction for generating the second card of the second application, the electronic device needs to determine whether the first display region can continue to accommodate a new card. When the quantity of cards included in the first display region is less than the preset quantity, the first display region is used as the display region for both the second card of the second application and the first card of the first application. If the quantity of cards included in the first display region is greater than the preset quantity, the first display region is no longer used as the display region for both the second card of the second application and the first card of the first application. The preset quantity is an empirical value or an experimental value, and a value of the preset quantity may be, for example, 10. This is not limited in this application.

With reference to the first aspect and the foregoing possible implementations, in a possible implementation, the generation instruction is generated after an operation of moving an icon or a card of the second application to the first display region is detected. In other words, in some implementations, the generation instruction for generating the second card of the second application needs to be generated after the operation of moving the icon or the card of the second application to the first display region is detected.

With reference to the claimed invention, the generation instruction is generated after an operation of moving an icon or a card of the second application to a preset region corresponding to the first display region is detected. In other words, in some implementations, the generation instruction may be generated after the icon or the card of the second application is moved to the first display region, or may be generated after the icon or the card of the second application is moved to the preset region corresponding to the first display region, for example, the generation instruction is generated after the icon or the card of the second application is moved to a place close to the first display region. This is not limited in this application.

With reference to the claimed invention, the detecting a generation instruction for generating a second card of a second application includes: detecting the generation instruction when it is detected that time of stay of the icon or the card corresponding to the second application in the first display region or the preset region corresponding to the first display region exceeds first preset duration.

In other words, to avoid mis-generation of the second card of the second application, for example, the user transitorily moves the icon or the card of the second application to the first display region or the preset region corresponding to the first display region when adjusting a location of the icon or the card of the second application, in an implementation of this application, after it is detected that the icon or the card corresponding to the second application is moved to the first display region or the preset region corresponding to the first display region, it is further determined whether time of stay of the icon or the card corresponding to the second application in the first display region or the preset region corresponding to the first display region exceeds the first preset duration. When the time of stay of the icon or the card corresponding to the second application in the first display region or the preset region corresponding to the first display region exceeds the first preset duration, it is determined that the generation instruction for the second card of the second application is detected.

With reference to the first aspect and the foregoing possible implementations, in a possible implementation, an Android operating system is deployed on the electronic device, and the Android system of the electronic device includes a system program and the second application that are located at an application layer, and the system program is used to: in response to the generation instruction for generating the second card of the second application, obtain card data of the second card from the second application, and when the at least one display size of the second card of the second application includes the first display size, control the electronic device to display the card of the second application in the first display region in the first display size.

With reference to the first aspect and the foregoing possible implementations, in a possible implementation, the system program is further used to: detect the instruction for generating the second card of the second application, determine whether a quantity of cards included in the first display region exceeds a preset quantity, and obtain card data of the second card from the second application when the quantity of cards included in the first display region is less than the preset quantity.

With reference to the first aspect and the foregoing possible implementations, in a possible implementation, the generation instruction is generated by the system program after the operation of moving the icon or the card of the second application to the first display region is detected.

With reference to the first aspect and the foregoing possible implementations, in a possible implementation, the generation instruction is generated by the system program after the operation of moving the icon or the card of the second application to the preset region corresponding to the first display region is detected.

With reference to the claimed invention, the generation instruction is generated when it is detected that the time of stay of the icon or the card corresponding to the second application in the first display region or the preset region corresponding to the first display region exceeds the first preset duration.

According to a second aspect, this application provides a card display apparatus, including a display module and a processing module. The processing module is configured to: detect a generation instruction for generating a second card of a second application, and use a first display region for displaying a first card of a first application as a display region for both the second card of the second application and the first card of the first application.

The display module is configured to display the first card of the first application in the first display region.

In some implementations, the processing module is further configured to: detect the generation instruction for generating the second card of the second application, and control the display module to display the second card in the first display region, where the second card covers the first card for display.

In some other implementations, the first card is displayed in the first display region in a first display size, and a size of the first display region is the same as the first display size; and the processing module is further configured to: detect the generation instruction for generating the second card of the second application; then, obtain card data of the second card, where the card data of the second card includes at least one display size corresponding to the second card; determine whether the at least one display size of the second card includes the first display size; and if the at least one display size of the card of the second application includes the first display size, control the display module to display the second card of the second application in the first display region in the first display size.

In some implementations, there is correspondingly a first control in the first display region, and the first control is configured to control, according to a user instruction, to switch a card displayed in the first display region. The user instruction includes: The user switches the card in the first display region in a manner such as voice or a preset gesture. For example, the user slides downward, upward, leftward, or rightward by using an air gesture, to switch the card displayed in the first display region.

In some implementations, the processing module is further configured to: detect the instruction for generating the second card of the second application; determine whether a quantity of cards included in the first display region exceeds a preset quantity; and if the quantity of cards included in the first display region is less than the preset quantity, use the first display region as the display region for both the second card of the second application and the first card of the first application.

In some implementations, the generation instruction is generated after an operation of moving an icon or a card of the second application to the first display region is detected. In some other implementations, the generation instruction is generated after an operation of moving an icon or a card of the second application to a preset region corresponding to the first display region is detected.

According to the claimed invention, the processing module detects the generation instruction when detecting that time of stay of the icon or the card corresponding to the second application in the first display region or the preset region corresponding to the first display region exceeds first preset duration.

According to a third aspect, this application provides an electronic device, including one or more processors and one or more memories. The one or more memories store one or more programs, and when the one or more programs are executed by the one or more processors, the electronic device is enabled to perform the method according to any implementation of the first aspect.

According to a fourth aspect, this application provides a computer-readable storage medium. The storage medium stores instructions, and when the instructions are executed on a computer, the computer is enabled to perform the method according to any implementation of the first aspect.

According to a fifth aspect, an embodiment of this application provides a computer program product. When the computer program product runs on an electronic device, the electronic device is enabled to perform the method according to any implementation of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1A is a schematic diagram of a desktop 10 of a mobile phone 1 according to an embodiment of this application;
FIG. 1B is a schematic diagram of a leftmost home screen 20 of a mobile phone 1 according to an embodiment of this application;
FIG. 1C is a schematic diagram of a graphical interface in which a user taps a weather application 106 to view a weather message according to an embodiment of this application;
FIG. 1D is a schematic diagram of an interface 17 of a weather application 106 according to an embodiment of this application;
FIG. 1E is a schematic diagram showing that a user adds a service card by using a settings application 109 according to an embodiment of this application;
FIG. 1F is a schematic diagram of applications that support a service card according to an embodiment of this application;
FIG. 1G is a schematic diagram of setting a display location and a display size of a service card according to an embodiment of this application;
FIG. 2A is a schematic diagram of a desktop 10 of a mobile phone 1 according to an embodiment of this application;
FIG. 2B is a schematic diagram of a desktop 10 obtained after a card of a food ordering application 103 is added according to an embodiment of this application;
FIG. 3A is a schematic diagram showing that a user moves an icon of a weather application 106 to a display region 11a of a card 11 of a note-taking application 101 according to an embodiment of this application;
FIG. 3B is a schematic diagram showing that a user moves an icon of a weather application 106 to a display region 11a of a card 11 of a note-taking application 101 according to an embodiment of this application;
FIG. 3C is a schematic diagram of a desktop 10 obtained after a card 12 of a weather application 106 is added according to an embodiment of this application;
FIG. 4 is a framework diagram of a software structure of a terminal device according to an embodiment of this application;
FIG. 5A and FIG. 5B are a schematic diagram of an interaction procedure between modules in FIG. 4 that are related to solutions of this application according to an embodiment of this application;
FIG. 6A is a schematic diagram of a first size of a card according to an embodiment of this application;
FIG. 6B is a schematic diagram of a second size of a card according to an embodiment of this application;
FIG. 7A is a schematic diagram of a card display region S1 according to an embodiment of this application;
FIG. 7B is a schematic diagram of a preset region S2 corresponding to a card display region according to an embodiment of this application;
FIG. 8A is a schematic diagram of a desktop 10 of a mobile phone 1 according to an embodiment of this application;
FIG. 8B is a schematic diagram showing that a user adds a card of a chat application 108 according to an embodiment of this application;
FIG. 8C is a schematic diagram of prompting a user that a quantity of cards accommodated in a card display region exceeds a preset quantity according to an embodiment of this application;
FIG. 9A is a schematic diagram showing that a user adds a card of a game application 105 according to an embodiment of this application;
FIG. 9B is a schematic diagram of prompting a user that a card of a game application 105 does not support a first size according to an embodiment of this application;
FIG. 10A is a schematic diagram of a desktop 10 obtained after a card 14 of a gallery application 104 is added according to an embodiment of this application, where an original card of the gallery application 104 is no longer displayed;
FIG. 10B is a schematic diagram of another desktop 10 obtained after a card 14 of a gallery application 104 is added according to an embodiment of this application, where an original card of the gallery application 104 is still displayed;
FIG. 11A is a schematic diagram of a desktop 10 of a mobile phone 1 according to an embodiment of this application;
FIG. 11B is a schematic diagram showing that a user adds a card of a gallery application 104 according to an embodiment of this application;
FIG. 11C is a schematic diagram showing that a user adjusts a display sequence of a card of a gallery application 104 according to an embodiment of this application;
FIG. 12A is a schematic diagram of a desktop 10 of a mobile phone 1 according to an embodiment of this application;
FIG. 12B is a schematic diagram showing that a user drags a card of a weather application 106 out of a display region 11a according to an embodiment of this application;
FIG. 12C is a schematic diagram of a desktop 10 obtained after a user drags a card of a weather application 106 out of a display region 11a according to an embodiment of this application;
FIG. 13 is a schematic diagram of a structure of an apparatus according to an embodiment of this application; and
FIG. 14 is a schematic diagram of a hardware structure of an electronic device according to an embodiment of this application.

### DESCRIPTION OF EMBODIMENTS

This application provides a card display method and a terminal device. Various aspects of illustrative embodiments are described below by using terms commonly used by persons skilled in the art. In the descriptions of embodiments of this application, "/" means "or" unless otherwise specified. For example, A/B may represent A or B. In this specification, "and/or" is merely an association relationship for describing associated objects, and represents that three relationships may exist. For example, A and/or B may represent three cases: only A exists, both A and B exist, and only B exists. In addition, in the descriptions of embodiments of this application, "a plurality of" means two or more.

Terms "first", "second", and "third" below are used for description only, and cannot be understood as indicating or implying relative importance or implicitly indicating a quantity of indicated technical features. Therefore, a feature defined by "first", "second", or "third" may explicitly or implicitly include one or more such features.

A card display method provided in embodiments of this application may be applied to a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

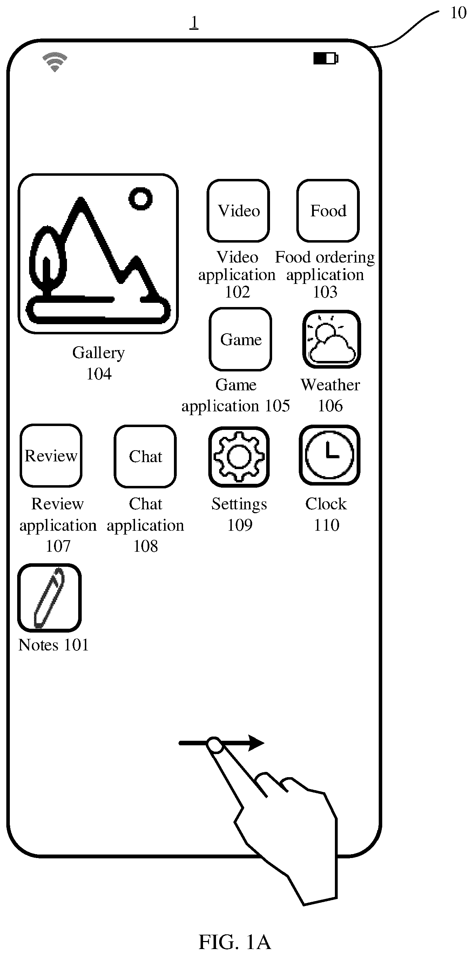

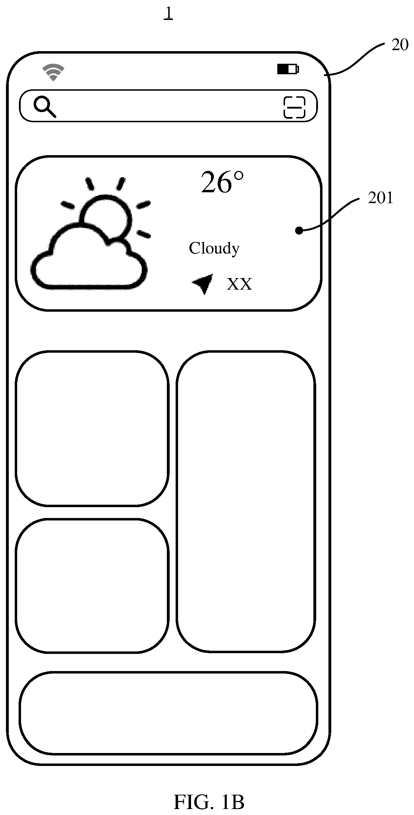

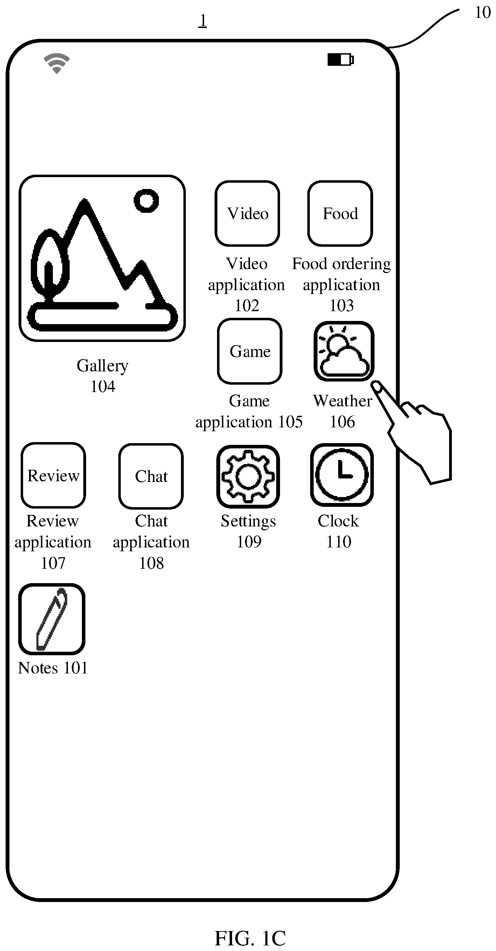

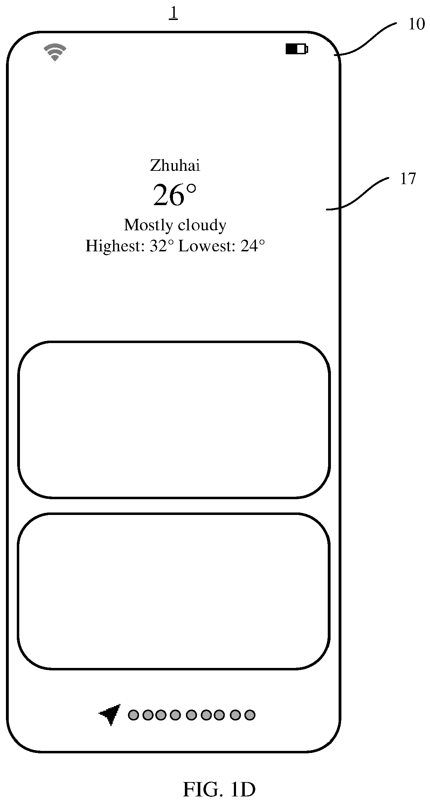

As described above, a user usually views a message of an APP by using a leftmost home screen of the terminal device or taps an APP to view a message of the APP. For example, as shown in FIG. 1A, a mobile phone is used as the terminal device, and applications such as a note-taking application 101, a video application 02, a food ordering application 103, a gallery application 104, a game application 105, a weather application 106, a review application 107, a chat application 108, Settings 109, and Clock 110 are displayed on a desktop 10 of the mobile phone 1. Assuming that the user needs to view a message of Weather 106, the user needs to slide rightward to a leftmost home screen 20 of the mobile phone 1, to display weather information 201 "Cloudy·26°" shown in FIG. 1B. Alternatively, as shown in FIG. 1C, the user taps the weather application 106 on the desktop 10, and enters a first interface 17 of the weather application 106, to display the first interface 17 of the weather application 106 shown in FIG. 1D and display weather information "Zhuhai-26°-Mostly cloudy·Highest: 32°·Lowest: 24°".

It may be understood that information about the weather application 106 displayed on the leftmost home screen 20 of the mobile phone 1 and the first interface 17 of the weather application 106 is merely an example. In another implementation, more weather-related information may be further displayed. This is not limited in this application.

It may be understood that the applications displayed on the desktop 10 are also examples. In another implementation, there may alternatively be more or fewer other applications on the desktop 10. This is not limited in this application.

It may be learned that the foregoing operation manner is simplex and boring. Therefore, in some implementations, the user may display an APP message by using a service card. The service card (referred to as a card below) is a new message display manner. After the user adds a card of an APP application, a message of the APP is displayed to the user in a form of a card.

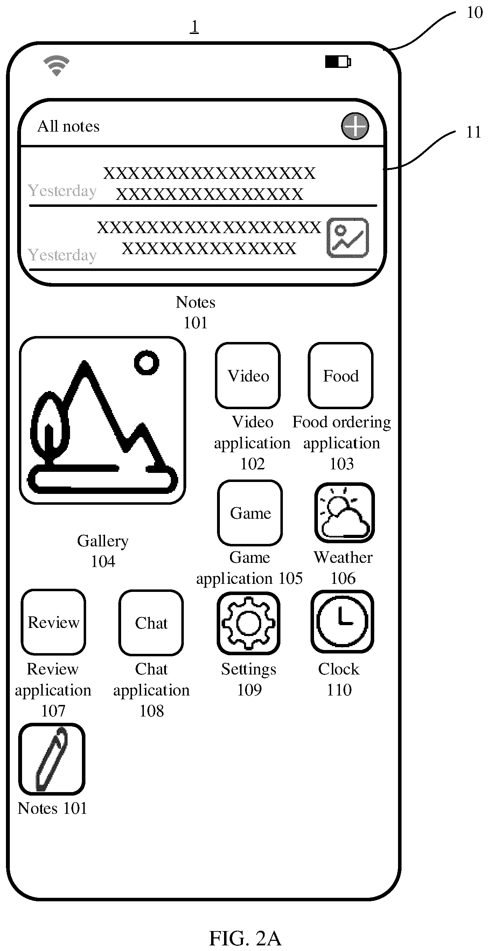

For example, as shown in FIG. 2A, assuming that the user adds the note-taking application 101 as a card, a card 11 corresponding to the note-taking application 101 is displayed on the desktop 10 of the mobile phone 1, and a message, such as text information or picture information, of the note-taking application 101 is displayed on the card 11.

In such a solution, rich messages of an application can be flexibly displayed. However, first, steps of adding a card are cumbersome. The user needs to add, as a card by using a system settings option, an application that the user wants to add as a card. If the user wants to add cards of a plurality of applications, the user needs to add each application as a card by using the system settings option.

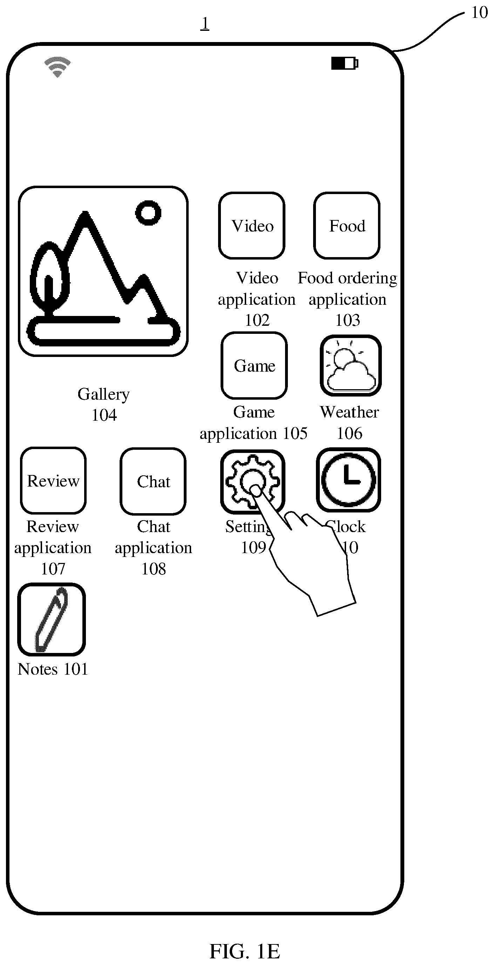

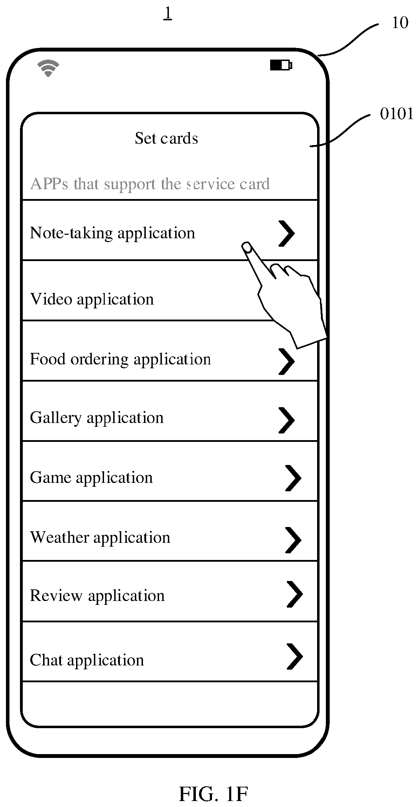

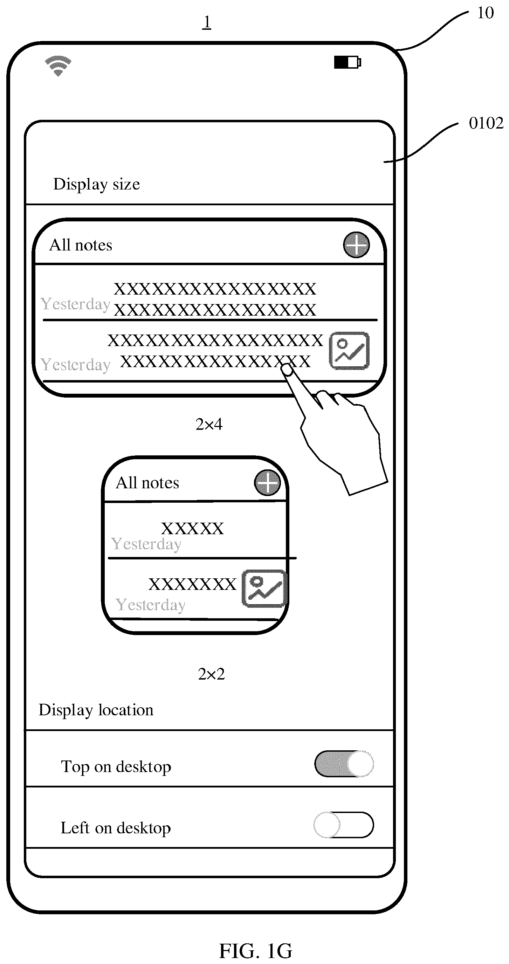

For example, as shown in FIG. 1E, the user needs to tap the settings application 109 on the desktop 10, and select, from a setting card interface 0101 of the settings application 109 in FIG. 1F, to add a card of a specific application. It may be learned from FIG. 1F that various applications (for example, the note-taking application 101, the video application 102, and the food ordering application 103) that support the service card are displayed in the setting card interface 0101. The user may tap a corresponding application to add a card for the application. Assuming that the user taps an option corresponding to the note-taking application to enter an interface 0102 shown in FIG. 1G, the user may add the card corresponding to the note-taking application 101 by selecting a display size and a display location of the card corresponding to the note-taking application 101. If the user needs to add cards of a plurality of applications, the foregoing operations in FIG. 1E to FIG. 1G are undoubtedly cumbersome.

Second, each card can display a message of only one application; in other words, a card and an application are in a one-to-one relationship. If the user wants to display messages of more applications on the desktop 10 in a form of a card, the user needs to add cards of a plurality of applications. This increases a quantity of cards and affects display of cards. In addition, to display more application messages, a size of the card is usually greater than a size of an application icon. Therefore, while the quantity of cards is increased, more space of the desktop 10 is undoubtedly occupied, an overall layout of the desktop 10 is affected, and sense of beauty of the desktop 10 is affected.

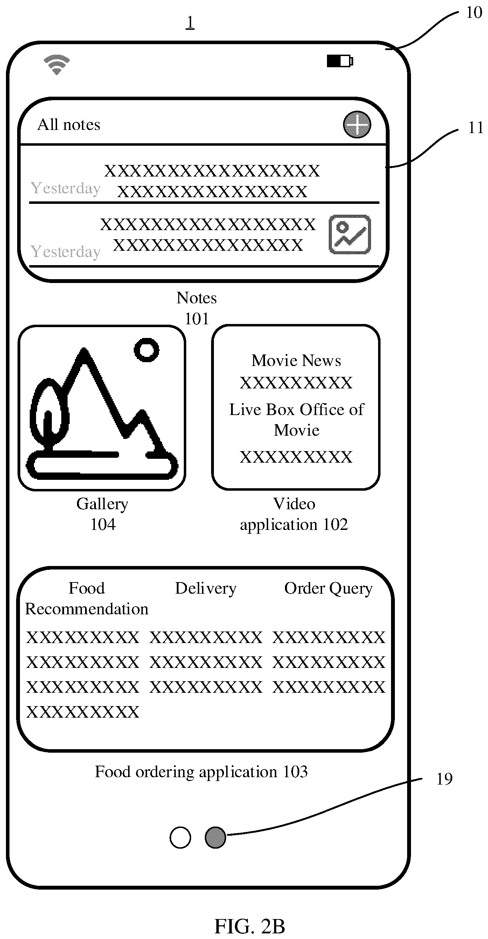

For another example, as shown in FIG. 2B, after the user adds the note-taking application 101, the gallery application 104, the video application 102, and the food ordering application 103 as cards, cards of only four applications can be displayed in a current interface of the desktop 10: a card of the note-taking application 101, a card of the gallery application 104, a card of the video application 102, and a card of the food ordering application 103, and icons or cards of other applications can only be displayed on another page of the desktop 10. The user needs to turn pages by using a control 19 to view the other applications, and this affects user experience.

Therefore, this application provides a card display method and a terminal device. In the card display method in this application, after a user adds a card of a first application to a desktop of an electronic device, the card of the first application is displayed on the desktop of the electronic device, and the user may drag an icon or a card of another application to a display region corresponding to the card of the first application and hover for specified duration, to add the card of the another application. Correspondingly, if the electronic device detects that the user drags the icon or the card of the another application to the display region and hovers for time longer than a period of time, the electronic device adds the card of the another application to the display region. In addition, if the user does not adjust a display sequence between the card of the another application and the card of the first application, the newly-added card of the another application covers the card of the first application, and is displayed in the display region in a size corresponding to the card of the first application.

In some implementations, a display region corresponding to the card of the first application may accommodate a preset quantity of cards. The preset quantity is an empirical value or an experimental value, and may be set by the user based on a requirement; or the preset quantity may be a fixed value, and a value of the preset quantity may be 10. This is not limited in this application.

In addition, the first card displayed to the user in the display region corresponding to the card of the first application is a card corresponding to a message of an application displayed on the desktop, and may be selected by the user based on a requirement from cards in the display region corresponding to the card of the first application, and a display sequence of the cards in the display region may also be adjusted by the user based on a requirement. The first application includes but is not limited to applications such as the video application 02, the food ordering application 103, the gallery application 104, the game application 105, the weather application 106, the review application 107, the chat application 108, Settings 109, and Clock 110. Another application is an application different from the first application.

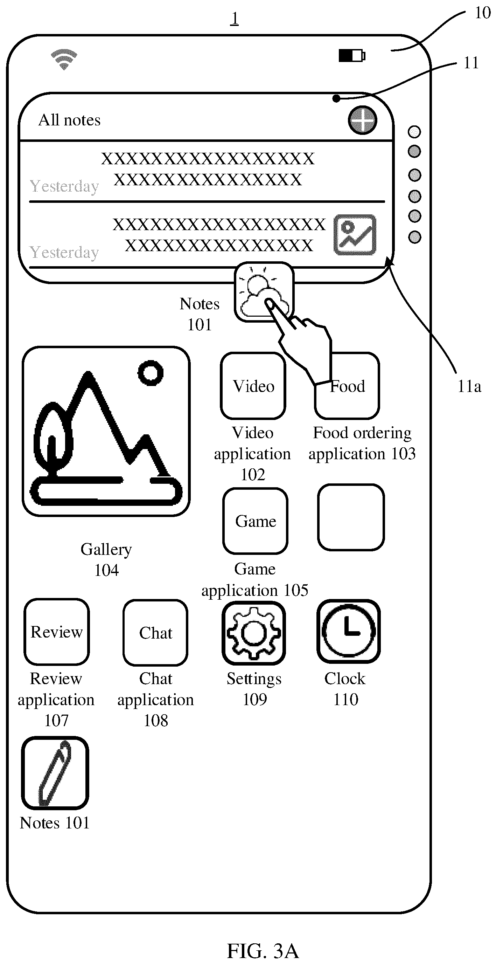

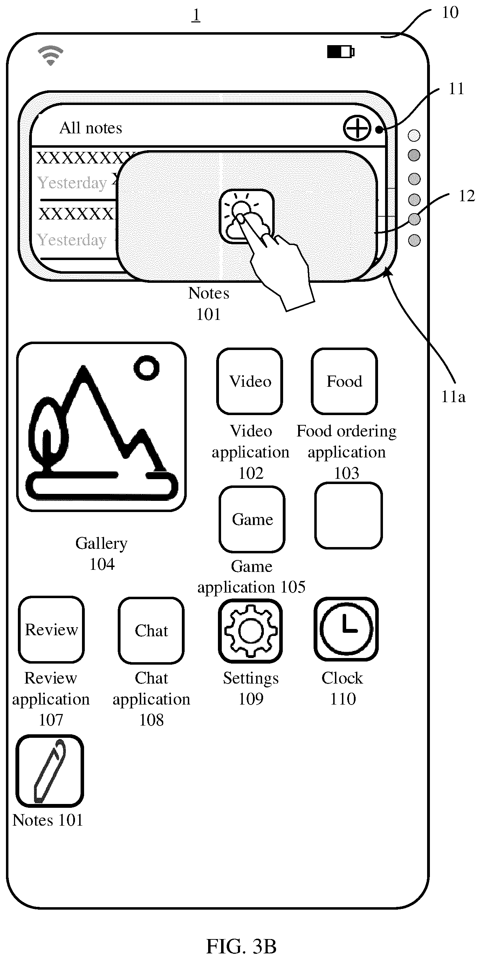

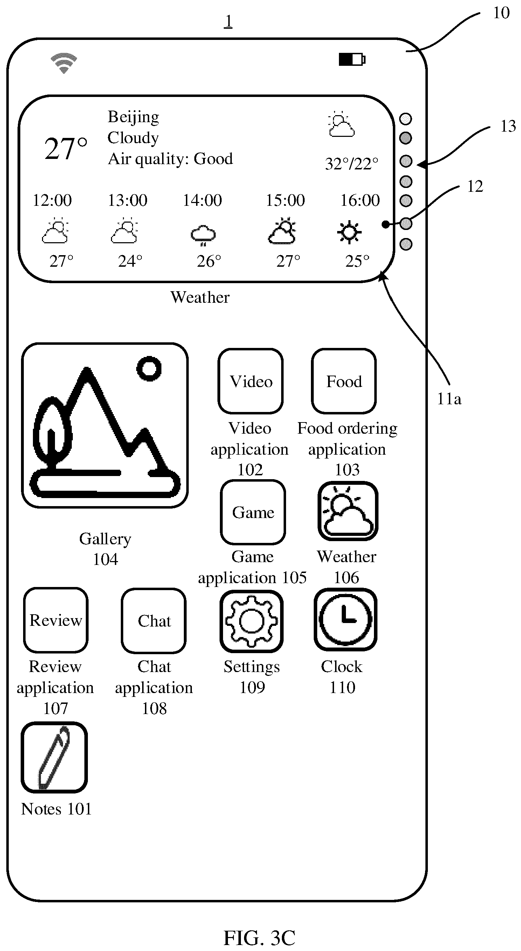

For example, as shown in FIG. 3A, after the user adds the note-taking application 101 as a card, the card 11 corresponding to the note-taking application 101 is displayed on the desktop 10, and the display region 11a of the card 11 is a display size of the card 11 that the user selects to display. In this case, if the user continues to add the weather application 106 as a card, as shown in FIG. 3B, the user only needs to drag an icon of the weather application 106 to the display region 11a corresponding to the card 11, and a card 12 corresponding to the weather application 106 is displayed in the display region 11, as shown in FIG. 3C.

In some implementations, when the user does not adjust a display sequence of the card corresponding to the weather application 106 and the card of the note-taking application 101 or a card of another application (for example, the card of the video application 102 or the card of the food ordering application 103) in the display region 11a, as shown in FIG. 3C, the card 12 of the weather application 106 covers the originally displayed card 11 of the note-taking application 101.

In some implementations, the user may slide upward or downward by using a control 13 to switch a card displayed in the display region, to choose to view a message of the card 11 corresponding to the note-taking application 101. This is not limited in this application.

In some other implementations, when the user does not adjust a display sequence of the card corresponding to the weather application 106 and the card of the note-taking application 101 or a card of another application in the display region 11a, the newly-added card 12 of the weather application 106 may alternatively be displayed below an existing card; in other words, the card 11 of the note-taking application 101 is still displayed in the display region 11a.

In the foregoing method, after adding a card of an application, the user only needs to drag an icon or a card of another application to a card display region corresponding to the application, to add the another application as a card, thereby eliminating a series of operations performed through system settings each time a card is added, and improving user experience.

In addition, if all newly-added cards are displayed in a display region corresponding to an existing card, and an overall layout of the desktop 10 is not affected due to an increase in a quantity of cards, thereby saving space of the desktop 10, ensuring sense of beauty of the layout of the desktop 10, and improving user experience.

It may be understood that the card display method in this application may be applied to a terminal device such as a smartphone, a tablet computer, or an intelligent wearable device with no limitation. For ease of description, a mobile phone is still used as the terminal device 1 to provide descriptions with reference to the accompanying drawings.

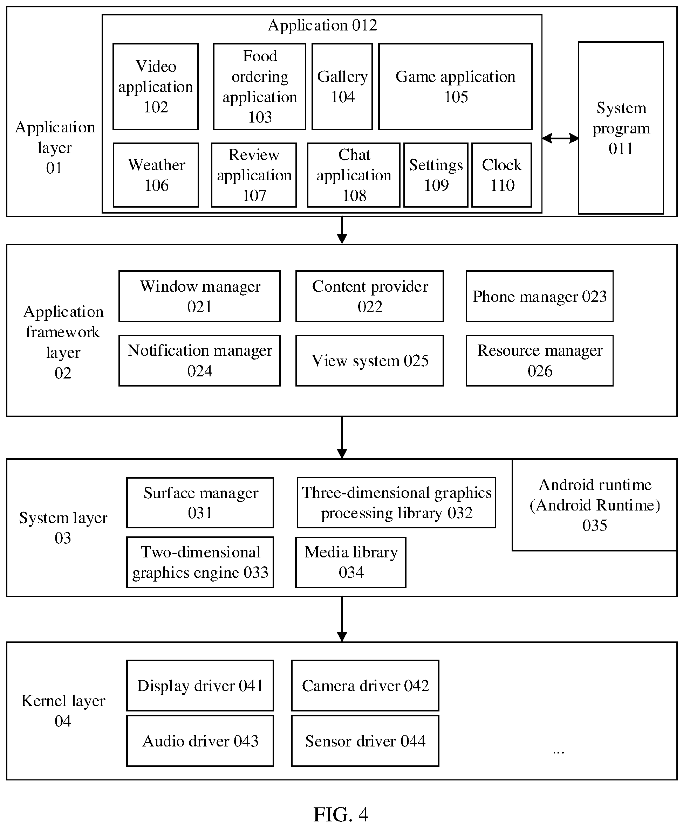

FIG. 4 is a schematic diagram of a layered architecture of a software structure of a mobile phone 1 used in an embodiment of this application. The layered architecture divides software into several layers, and each layer has a clear role and task. The layers communicate with each other through software interfaces. As shown in FIG. 4, the software structure of the mobile phone 1 is separately an application layer 01, an application framework layer 02, a system layer 03, and a kernel layer 04 from top to bottom.

The application layer 01 may include a series of application packages. In some implementations of this application, programs mainly included in the application layer 01 are classified into an application 012 and a system program 011. The application 012 is each application installed on a desktop of the mobile phone 1, and the system program 011 is a system program used to manage each application on the desktop of the mobile phone 1, and is a system that controls and coordinates the mobile phone 1 and an external device (for example, an input/output device) of the mobile phone 1 and supports application development and running on the mobile phone 1. A main function of the system program 011 is to schedule, monitor, and maintain a system of the mobile phone 1, and manage various independent hardware in the system of the mobile phone 1, so that they can work in a coordinated manner. In some implementations, the system program 011 may be an operating system installed on the mobile phone 1, for example, an Android (android) operating system or a Harmony operating system.

In some implementations of this application, the system program 011 is used to: add a card of an application according to a user instruction, and determine, according to the user instruction, a display manner of the card corresponding to the application. In some implementations, a display manner of a card corresponding to an application includes a display size of the card and a display theme of the card (for example, a daytime theme or a night theme). This is not limited in this application.

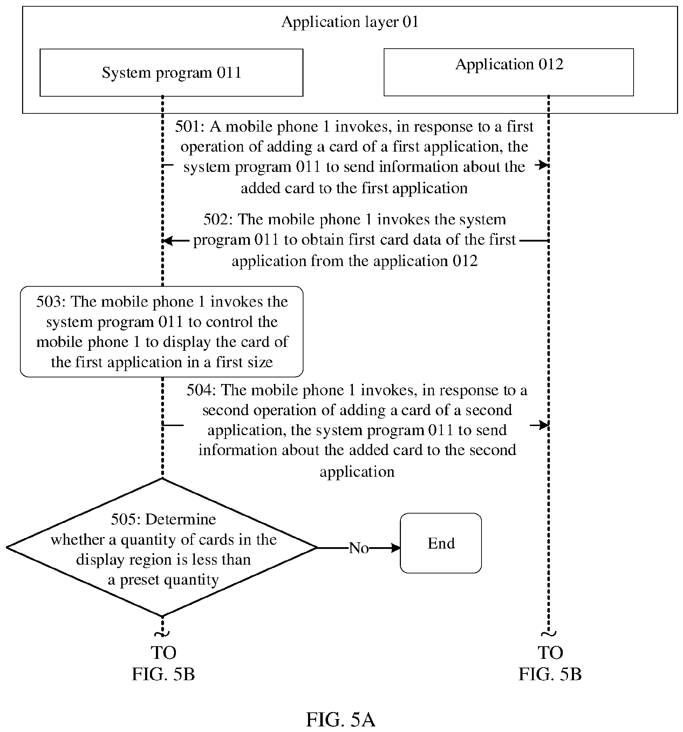

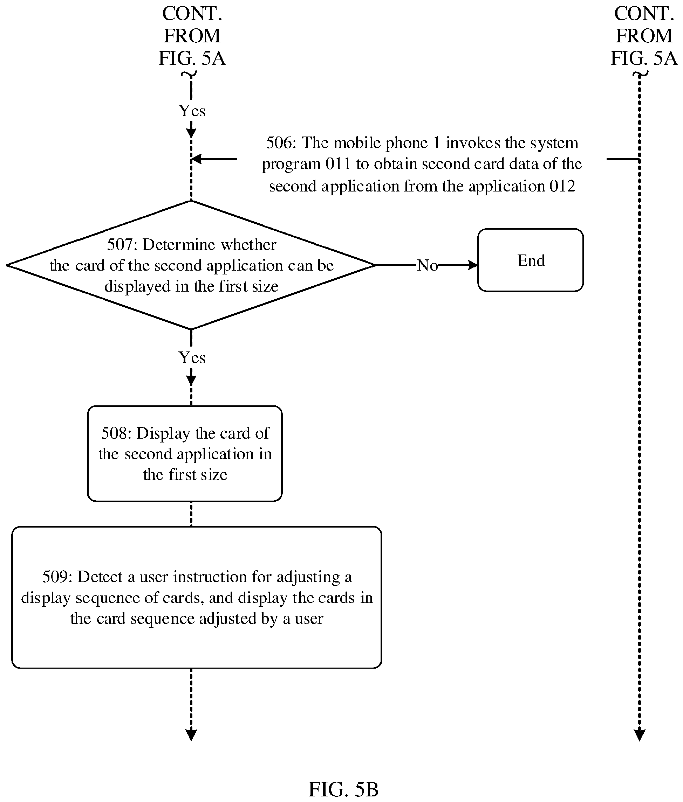

In some implementations of this application, the system program 011 is further used to: obtain card data corresponding to an application, determine a display size that can be supported by the card corresponding to the application, and display the card in the display size supported by the card corresponding to the application. Details are described below with reference to FIG. 5A and FIG. 5B.

The application 012 may include applications installed on the mobile phone 1, such as a video application 102, a food ordering application 103, a gallery application 104, a game application 105, a weather application 106, a review application 107, a chat application 108, Settings 109, and Clock 110. Examples are not listed one by one in this embodiment of this application.

The application framework layer 02 provides an application programming interface (application programming interface, API) and a programming framework for an application at the application layer 01. The application framework layer 02 includes some predefined functions. As shown in FIG. 4, the application framework layer 02 may include a window manager 021, a content provider 022, a phone manager 023, a notification manager 024, a view system 025, a resource manager 026, and the like. The window manager 021 is configured to manage a window program, for example, a size of a window currently displayed on the mobile phone 1, or a manner in which the window is currently displayed (for example, whether the manner is split-screen display). The content provider 022 is configured to: store and obtain data and make the data accessible to an application. The data may include video data, image data, audio data, phone book data, and the like. The phone manager 023 is configured to: manage a call status of the mobile phone 1, obtain device information of the mobile phone 1, subscriber identity card (Subscriber Identity Module, SIM) information, and mobile network or wireless fidelity (wireless-fidelity, Wi-Fi) information, and listen to the call status of the mobile phone 1, for example, a call status service or a signal strength status. The view system 025 includes a visual control, such as a control 13 that displays a quantity of selectable cards in a display region. Generally, a display interface of the mobile phone 1 may include one or more views. For example, the display interface may include a view for displaying icons of the foregoing applications, a view for displaying text, a view for displaying a picture, and the like.

The Android runtime 035 includes a kernel library and a virtual machine. The Android runtime 035 is responsible for scheduling and management of the Android system. The kernel library includes two parts: a functional function that needs to be invoked by a java language, and a kernel library of Android.

The application layer 01 and the application framework layer 02 run in the virtual machine. The virtual machine executes java files at the application layer 01 and the application framework layer 02 as binary files. The virtual machine is configured to perform operations such as object lifecycle management, stack management, thread management, security and exception management, and garbage collection.

The system library may include a plurality of functional modules, for example, a surface manager 031 (surface manager or surface flinger), a media library 034 (media libraries), a three-dimensional graphics processing library 032 (for example, OpenGL ES), and a two-dimensional graphics engine 033 (for example, SGL).

The surface manager 031 is configured to manage a display subsystem, and provide fusion of two-dimensional and three-dimensional layers for a plurality of applications. The media library 034 supports playback and recording in a plurality of common audio and video formats, static image files, and the like. The media library may support a plurality of audio and video coding formats, for example, MPEG4, H.264, MP3, AAC, AMR, JPG, and PNG. The three-dimensional graphics processing library 032 is used to implement three-dimensional graphics drawing, image rendering, composition, layer processing, and the like. The two-dimensional graphics engine 033 is a drawing engine for two-dimensional drawing.

The kernel layer 04 is a layer between hardware and software. The kernel layer 04 includes at least a display driver 041, a camera driver 042, an audio driver 043, and a sensor driver 044.

A physical layer (physic, PHY) may be included below the kernel layer 04, and the physical layer may provide a transmission medium and an interconnection channel for data communication inside a device or between devices, to provide a reliable environment for data transmission. The physical layer may be understood as a transport layer that provides a "signal and medium".

It may be understood that the foregoing schematic diagram of the layered architecture of the software structure of the mobile phone 1 is merely an example. In another implementation, the layered architecture of the software structure of the mobile phone 1 may further include more or fewer layers, or a layered structure formed in another manner. This is not limited in this application.

An interaction process of some modules or layer structures in FIG. 4 that are involved when the method in this application is implemented is described below with reference to FIG. 5A and FIG. 5B based on the software structure framework layer of the mobile phone 1 shown in FIG. 4.

Specifically, as shown in FIG. 5A and FIG. 5B, the method includes the following steps.

501: The mobile phone 1 invokes, in response to a first operation of adding a card of a first application, a system program 011 to send information about the added card to the first application.

It should be noted that, when a user creates the card of the first application, the first operation means that the user adds the card of the first application through system settings. For details, refer to the descriptions in FIG. 1E to FIG. 1G. Details are not described herein again. In some other implementations, the first operation may alternatively be some preset gesture operations or a voice instruction. For example, the user adds the card of the first application in a voice instruction manner. Alternatively, the user enables, in a two-finger pinching manner on a desktop 10, the desktop 10 to enter an editing state, and then adds a first card for the first application in the editing state. This is not limited in this application. In some implementations, the first application includes applications such as the video application 102, the food ordering application 103, the gallery application 104, the game application 105, the weather application 106, the review application 107, the chat application 108, Settings 109, and Clock 110 that are shown in FIG. 1A to FIG. 4. This is not limited in this application.

502: The mobile phone 1 invokes the system program 011 to obtain first card data of the first application from an application 012.

In some implementations, the card data includes data such as a display size that can be supported by the card, a display theme of the card, and a display location of the card. It may be understood that for operations of adding cards for different applications, the mobile phone 1 invokes the system program 011 to obtain card data of corresponding applications from different applications 012. For example, if the first operation is to add a card for the video application 102, the system program 011 obtains card data of the video application 102 from the video application 102; and if the first operation is to add a card for the food ordering application 103, the system 011 obtains card data of the food ordering application 103 from the food ordering application 103.

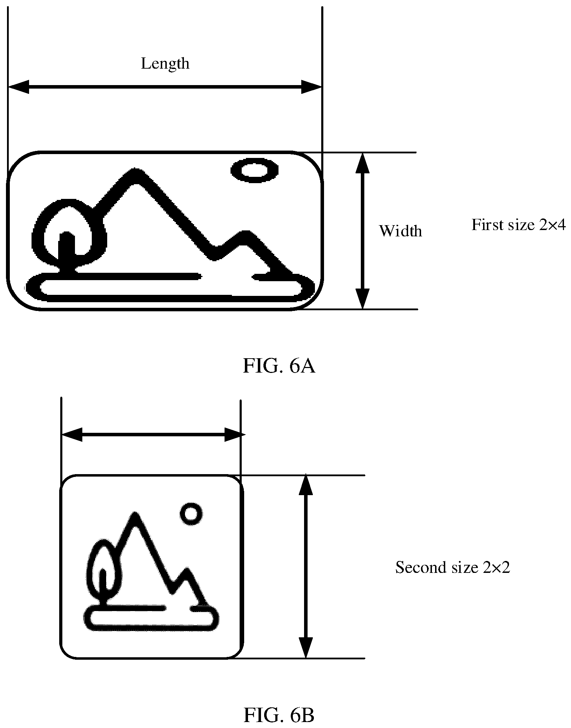

For example, FIG. 6A and FIG. 6B are schematic diagrams of a display size that can be supported by a card. As shown in FIG. 6A, a length-width ratio of the display size that can be supported by the card is 4×2 (for example, 1000 pixels (px) × 500 px). As shown in FIG. 6B, a length-width ratio of the display size that can be supported by the card is 2×2 (for example, 500 pixels (px) × 500 px). It may be understood that in some other implementations, the display size that can be supported by the card may alternatively have another corresponding length-width ratio. This is not limited in this application.

503: The mobile phone 1 invokes the system program 011 to control the mobile phone 1 to display the card of the first application in a first size.

In some implementations, the mobile phone 1 invokes the system program 011 to control the mobile phone 1 to display the card of the first application in the first size according to a user instruction. It may be understood that, when the user adds the card of the first application through system settings, the user may select any display size based on a display size supported by the card, to display the card of the first application.

For example, the first application is the note-taking application 101. If the user chooses to display a card of the note-taking application 101 in the display size with the length-width ratio 4×2, as shown in FIG. 3A, the card of the note-taking application 101 is displayed in the interface 10 of the mobile phone 1 in the display size with the length-width ratio 4×2.

504: The mobile phone 1 invokes, in response to a second operation of adding a card of a second application, the system program 011 to send information about the added card to the second application.

In some implementations, the second application is different from the first application, and the second application includes but is not limited to applications such as the video application 102, the food ordering application 103, the gallery application 104, the game application 105, the weather application 106, the review application 107, the chat application 108, Settings 109, and Clock 110 that are shown in FIG. 1A to FIG. 4.

In some implementations, the second operation is an operation in which the user adds an application card without using a manner of adding the application card through system settings, for example, an operation in which the user adds the card of the second application by dragging an icon of the second application to a display region of the card of the first application.

In some implementations, the second operation may alternatively be an operation in which the user adds an application card through system settings and then drags the card to a display region of the card of the first application to accommodate the card of the second application in the display region of the card of the first application. This is not limited in this application.

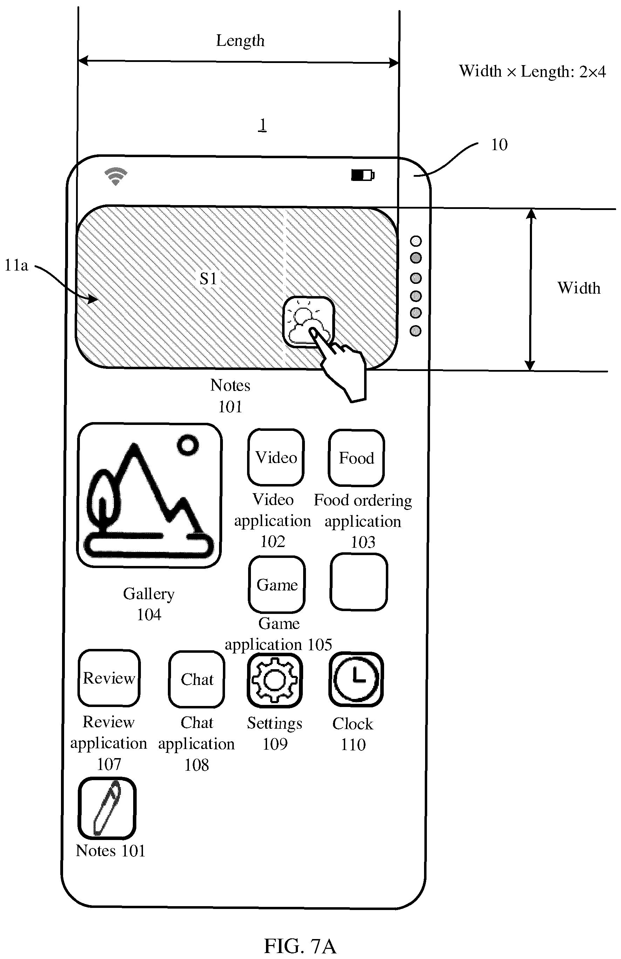

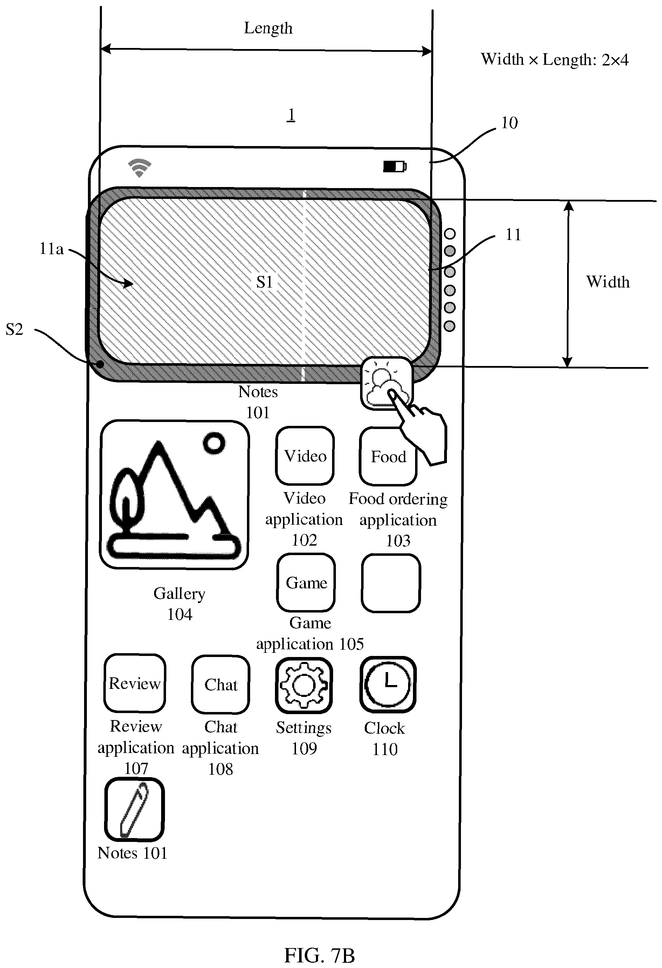

In some implementations, the display region of the card of the first application is a region covered by the card after the card is displayed in any display size. For example, as shown in FIG. 7A, the display region of the card of the first application is a shaded region S1 (that is, the display region 11a in the foregoing descriptions) covered by the card of the note-taking application 101 that is displayed in the first size (the length-width ratio 4×2). Correspondingly, for example, the second application is the weather application 106. The user may add a card of the weather application 106 by dragging an icon of the weather application 106 to the region S1. In some implementations, when the user drags the weather application 106 to the region S1, to prevent the user from accidentally triggering adding of the card of the weather application 100, alter detecting that the user has an obvious hovering action, the mobile phone 1 may invoke the system program 011 to control to deform the icon of the weather application 106, to prompt the user that the card of the weather application 106 is being added. For example, as shown in FIG. 7B, after detecting that the user drags an icon of the weather application 106 to the region S1 and detecting that the user has an obvious hovering action, the mobile phone 1 invokes the system program 011 to deform the icon of the weather application 106 to a second size shown in FIG. 7B. In some implementations, a length-width ratio of the second size may be consistent with the length-width ratio of the first size, but an area displayed by the second size is less than an area displayed by the first size.

According to the claimed invention, when detecting that the user drags an icon of the second application to the region S1 and stays in the region S1 for first preset duration, the mobile phone 1 may determine that it is detected that the user has an obvious hovering action in the region S1. The first preset duration is an empirical value or an experimental value, for example, a value of the first preset duration may be 3 seconds. This is not limited in this application.

It may be understood that, in some implementations, the user may alternatively drag the icon of the second application to a preset region corresponding to a location of the card of the first application, and after detecting that the user drags the icon of the second application to the preset region, the mobile phone 1 determines that the second operation of adding the card of the second application by the user is detected. For example, as shown in FIG. 7B, the user may drag the icon of the weather application 106 to a preset region S2. In some implementations, an area of the preset region S2 is greater than that of the region S1.

Similarly, in some implementations, after detecting that the user drags the icon of the second application to the preset region S2 and detecting that the user has an obvious hovering action, the mobile phone 1 determines that the second operation of adding the second application by the user is detected, and then invokes the system program 011 to control to deform the icon of the second application, to indicate that the user is currently performing an operation of adding a card. This is not limited in this application.

In some other implementations, the second application may alternatively be a card corresponding to an application. In other words, it may be understood that the card is also an application. When the second application is a card, the second operation means that the user drags a card of an application to a display region of the existing card of the first application, that is, accommodates and manages cards in the interface 10. It may be understood that, when the second application is an application such as a non-card application, the user may add the second application as a card by dragging the icon of the second application to the display region of the card of the first application, and when the second application is a card application, the user may accommodate the second application in the display region of the existing card of the first application by dragging the card to the display region of the card of the first application. For example, as shown in FIG. 3A, the gallery application 104 has been displayed in the interface 10 as a card. The user drags a card 104' of the gallery application 104 to the display region 11a corresponding to the card 11 of the note-taking application 101, to accommodate the card 104' of the gallery application 104 in the display region 11a. In a process in which the user accommodates the card of the second application in the display region of the card of the first application, for corresponding deformation of the card of the second application, refer to the foregoing related descriptions. Details are not described herein again.

505: The system program 011 determines whether a quantity of cards in the display region is less than a preset quantity.

In some implementations, after detecting the second operation of adding the card of the second application by the user, the system program 011 needs to determine whether the display region of the card of the first application can continue to accommodate the card of the second application that is currently added by the user, that is, determine whether the quantity of cards in the display region exceeds the preset quantity. In some implementations, the preset quantity is an empirical value or an experimental value, and may be set by research and development personnel based on a requirement. For example, a value of the preset quantity may be 10. In some other implementations, the preset quantity may alternatively be set by the user through system settings based on a requirement. For example, the user may set the preset quantity to 5.

In still other implementations, the user may separately set different preset quantities for display regions of different types of cards based on requirements. For example, the user may add all chat applications in a display region (for example, a display region corresponding to a card of the chat application 108) as cards, and if three chat applications are installed on the mobile phone 1, the user may set the preset quantity to 3 (or greater than 3). For another example, the user may alternatively add commonly used APPs to a display region, and the preset quantity is also set based on a quantity of commonly used APPs of the user. This is not limited in this application.

If the quantity of cards in the display region is already equal to or even greater than the preset quantity, it indicates that the display region cannot accommodate a new card, and a current process of adding the card of the second application ends. In some implementations, when it is determined that the quantity of cards in the display region is already equal to or even greater than the preset quantity, the mobile phone 1 may display corresponding prompt information, to prompt the user that a quantity of cards that can be accommodated in the current display region has exceeded the preset quantity.

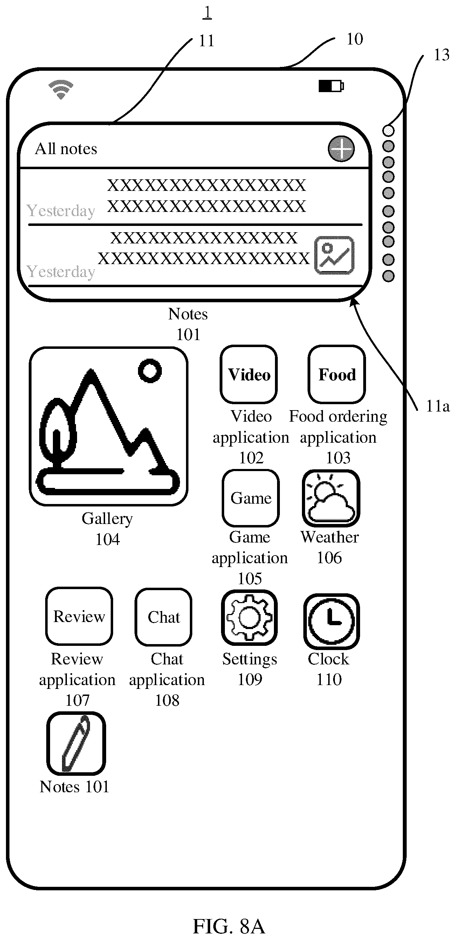

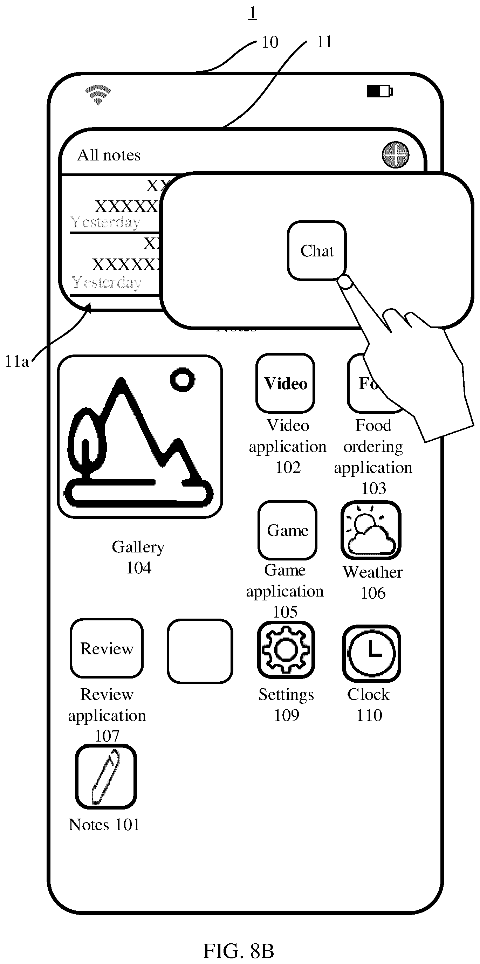

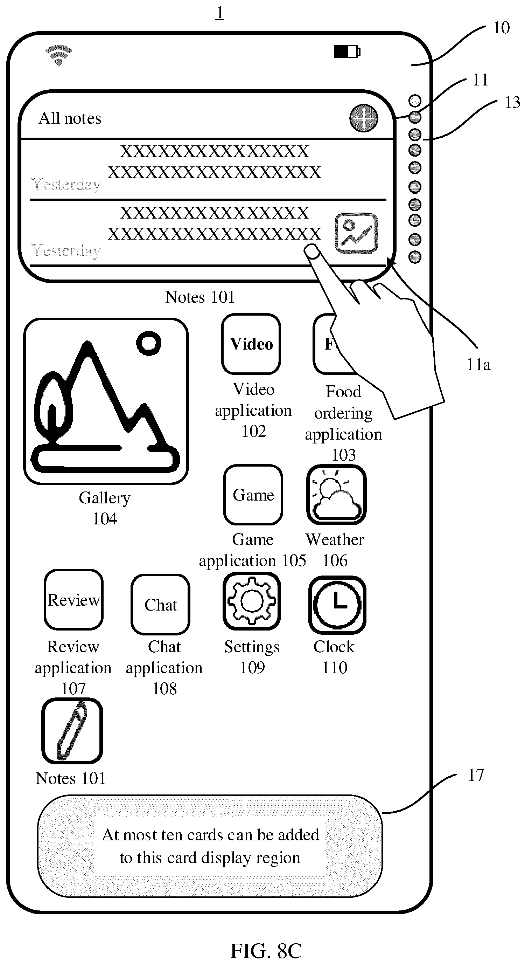

For example, as shown in FIG. 8A, it is assumed that a quantity of cards (which can be learned by using a selection option corresponding to a control 13) in the display region 11a of the card 11 of the note-taking application 101 is 10. and a preset quantity corresponding to the display region 11a is also 10. As shown in FIG. 8B, when the user continues to add the card of the chat application 108 to the display region 11a, because the quantity of cards has already exceeded the preset quantity, prompt information 17 "At most ten cards can be added to this card display region" shown in FIG. 8C is displayed in the interface 10 of the mobile phone 1, to prompt the user that a quantity of cards that can be accommodated in the current display region 11a reaches an upper limit and no more new cards can be accommodated. It may be understood that, in some implementations, the foregoing prompt may alternatively be provided for the user in another manner. For example, the mobile phone 1 prompts, in a form such as voice broadcasting or vibration, the user that the quantity of cards that can be accommodated in the current display region has exceeded the upper limit. This is not limited in this application.

If the quantity of cards in the display region is less than the preset quantity, it indicates that the display region can further accommodate a new card. In this case, 506 is performed.

506: When the quantity of cards in the display region is less than the preset quantity, the mobile phone 1 invokes the system program 011 to obtain second card data of the second application from the application 012.

When determining that the quantity of cards in the display region does not exceed the preset quantity, the mobile phone 10 invokes the system program 011 to obtain the card data of the second application from the application 012. For details, refer to the foregoing descriptions of 502. Details are not described herein again.

507: The system program 011 determines whether the card of the second application can be displayed in the first size. If yes, 508 is performed, and the system program 011 displays the card of the second application in the first size. If no, a current operation procedure of adding the card of the second application ends.

It may be understood that display sizes that can be supported by cards of applications are different. Therefore, whether a display size supported by the card of the second application that is to be added by the user includes the first size needs to be determined, that is, whether the card of the second application can be displayed in the first size.

If the card of the second application does not support the first size, the current process of adding the card of the second application ends.

In some implementations, when determining that the card of the second application does not support the first size, the mobile phone 1 may also display corresponding prompt information, to prompt the user that the card of the second application does not support the first size and cannot be displayed in the first size.

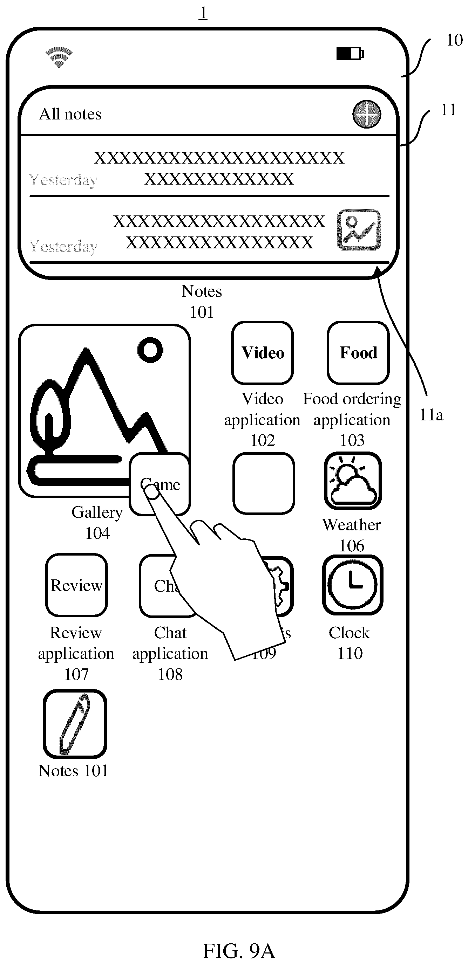

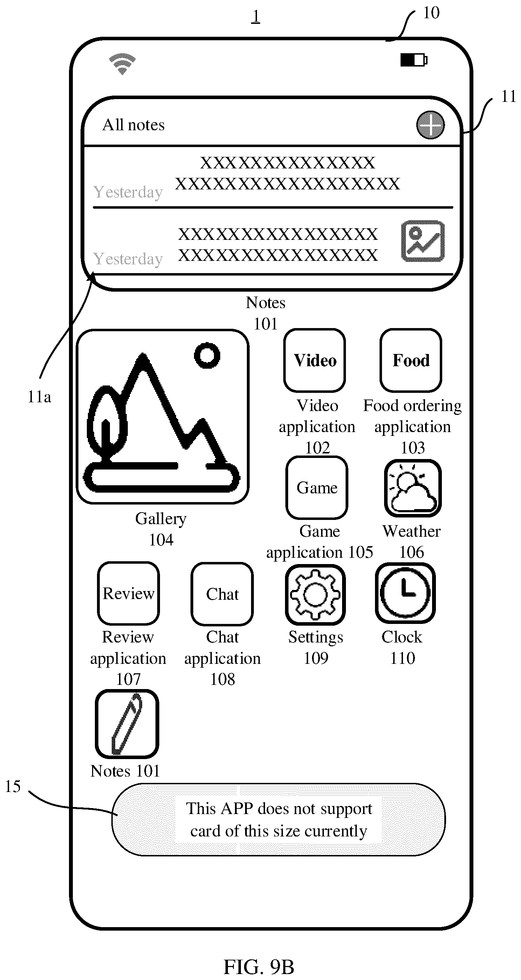

For example, as shown in FIG. 9A, it is assumed that the user continues to add a card of the game application 105 to the display region 11a, and the mobile phone 1 invokes the system program 011, and determines, based on card data of the game application 105 that is obtained in 506, that the game application 105 does not support the first size. In this case, as shown in FIG. 9B, the mobile phone 1 displays prompt information 15 "This APP does not support card of this size currently", to prompt the user that the game application 105 cannot be displayed in the first size. It may be understood that, in some implementations, the foregoing prompt may alternatively be provided for the user in another manner. For example, the mobile phone 1 prompts, in a form such as voice broadcasting or vibration, the user that the quantity of cards that can be accommodated in the current display region 11a has exceeded an upper limit. This is not limited in this application.

If the card of the second application can be displayed in the first size, 508 is performed.

508: The system program 011 displays the card of the second application in the first size.

For example, the second application is the weather application 106. As shown in FIG. 3A and FIG. 3B, it is assumed that the user adds a card 12 of the weather application 106. Because the weather application 106 supports the first size, as shown in FIG. 3C, the card 12 of the weather application 106 is displayed in the interface 10 in the first size.

It should be noted that, generally, after the user adds a card of an application, an icon of the application is still displayed in the interface 10. For example, as shown in FIG. 3C, after the user adds the card of the weather application 106, an icon of the weather application 106 is still displayed in the interface 10.

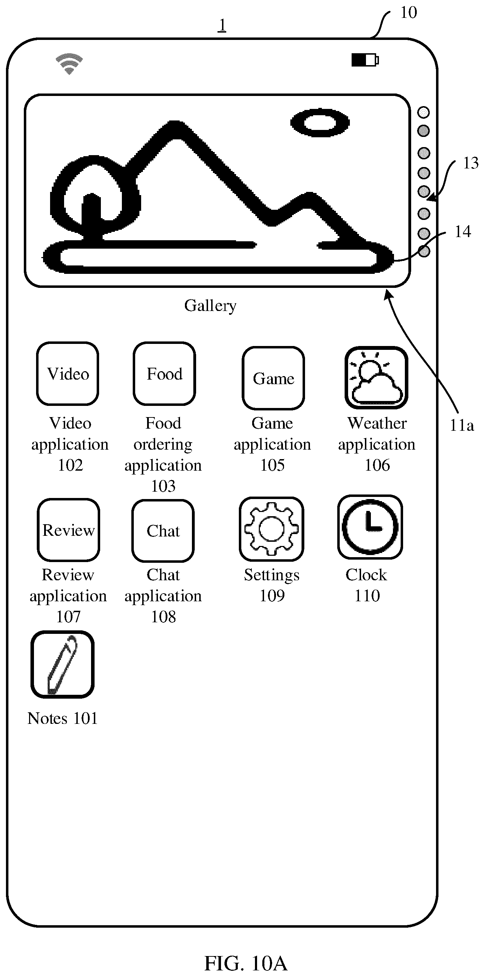

However, when the second application is a card, a purpose of dragging the card by the user to the display region of the card of the first application is to accommodate the card in the existing display region, to save space of the interface 10. In this case, after the user drags the second application to the display region, the icon of the application corresponding to the card is no longer displayed in the interface 10, and a location of the icon of the application corresponding to the card is automatically filled by an icon of another application, for example, as shown in FIG. 10A, is automatically filled by icons of the video application 102, the food ordering application 103, the review application 107, and the chat application 108.

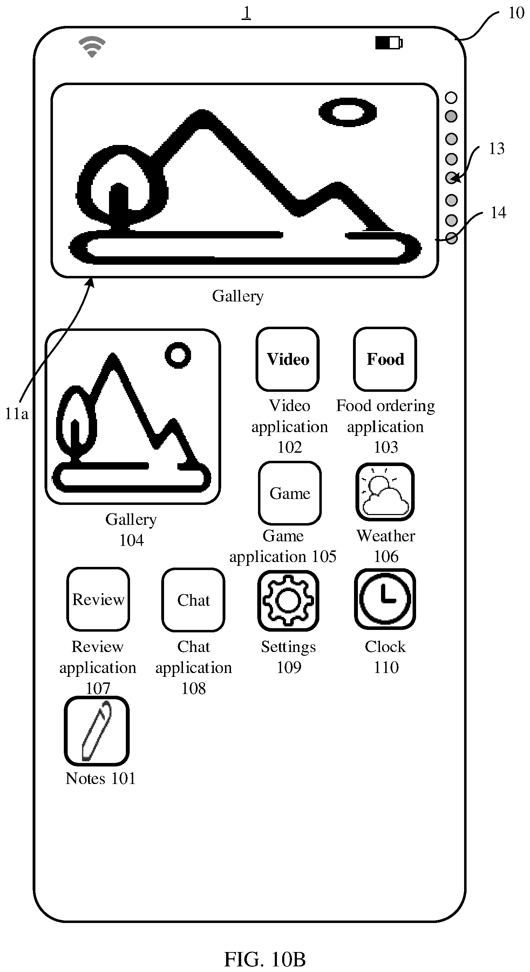

In some implementations, after the user drags the card to the display region of the card of the first application, a card corresponding to an original application in the interface 10 may also continue to be displayed. For example, as shown in FIG. 10B, after the user drags the card of the gallery application 104 to the display region 11a, an original card of the gallery application 104 may still be displayed in the interface 10 in a size different from the first size. This is not limited in this application.

509: The system program 011 detects a user instruction for adjusting a display sequence of cards, and displays the cards in the card sequence adjusted by the user.

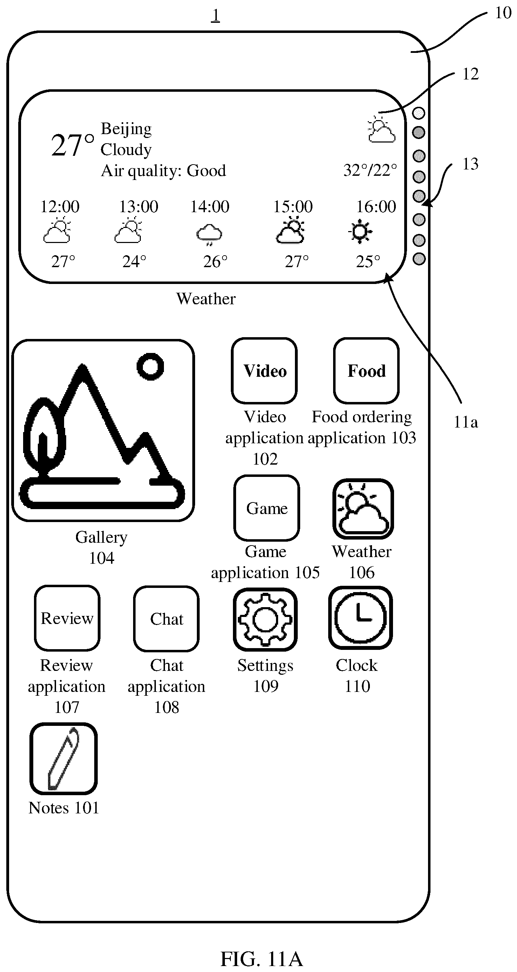

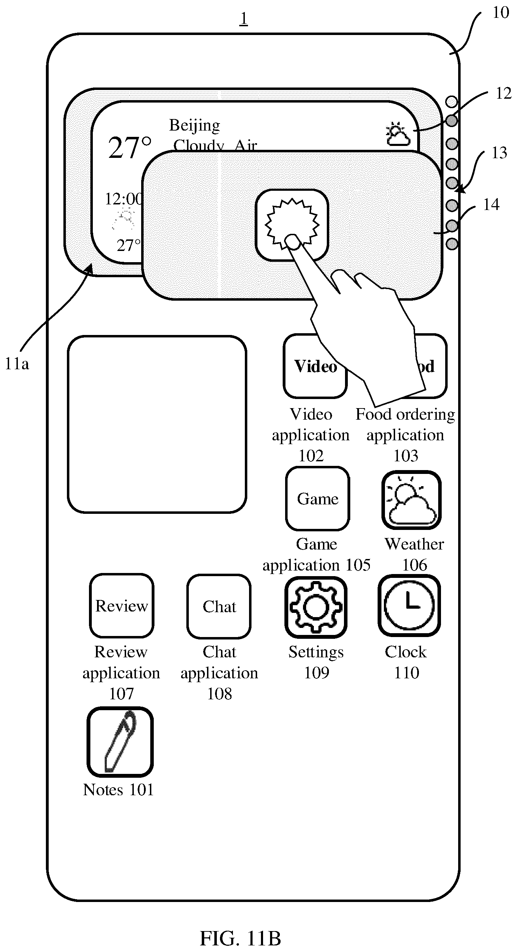

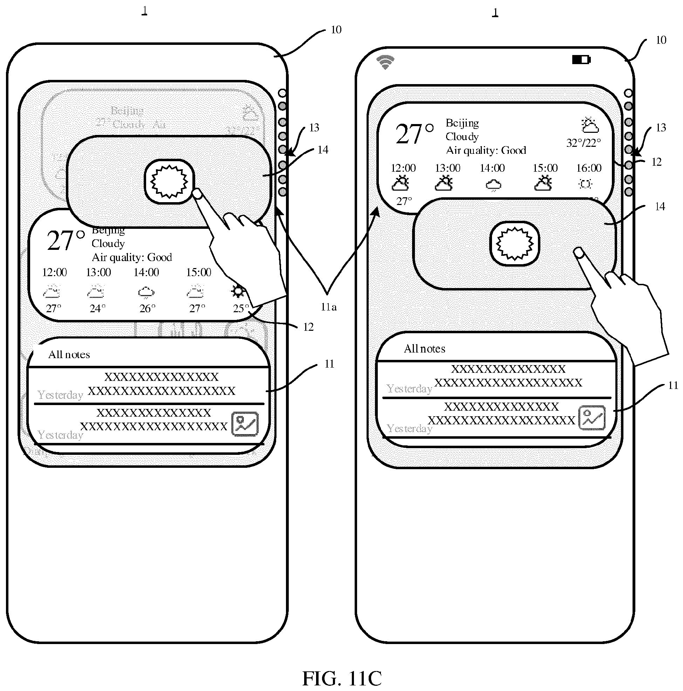

In some implementations, the user may alternatively adjust the display sequence of the cards in the display region based on a requirement. For example, as shown in FIG. 11A, the user drags a card 14 corresponding to the gallery application 104 to the display region 11a, and the user may hover for second preset duration, to adjust a display sequence of cards in the display region 11a. After detecting that the user hovers for the second preset duration, the mobile phone 1 displays an interface 10 shown in FIG. 11B. The user may drag, in a manner shown in FIG. 11C, the card 14 corresponding to the gallery application 104 in the display region 11a, to adjust a location of the card 14 corresponding to the gallery application 104 in the display region 11a.

In some other implementations, if the user does not adjust the display sequence of the cards in the display region, a first card displayed in the display region is, by default, a card newly added by the user. For example, it can be learned by comparing FIG. 3A and FIG. 10B that the first card displayed in the display region in the interface 10 is the card 11 of the note-taking application 101. After the user adds the card of the gallery application 104, a card displayed in the display region 11a in the interface 10 is the card 14 corresponding to the gallery application 104.

In the foregoing method, when adding a card of an application, the user does not need to add the card of the application through system settings each time, and only needs to drag, after creating a new card for the first time, an icon of another application or a card of another application to a location of the card created for the first time, to add the card of the another application. In addition, the newly-added card is accommodated in the display region of the card of the first application, to reduce space occupied by the card, and ensure that a layout of the interface 10 is not affected by an increase in a quantity of cards.

In some implementations of this application, after a quantity of cards in the display region of the card of the first application exceeds a specific value, the user needs to continuously slide, by using the control 13, to a card that the user wants to view, instead of viewing a message of a related application in a card manner. Therefore, when the user adds a card to the display region, it is necessary to set an upper limit for a quantity of cards that can be accommodated in the display region. When the quantity of cards in the display region is equal to the upper limit, the user is no longer allowed to continue to add a card to the display region, to ensure convenience of a manner in which the user views an application message by using the display region. However, if necessary, the user may alternatively not limit the quantity of cards that can be accommodated in the display region, that is, in the foregoing interaction process, 505 may be omitted. This is not limited in this application.

In some implementations of this application, the user may further combine display regions of cards corresponding to different applications, to quickly organize cards on the desktop 10. However, it should be understood that, before the display regions of the cards corresponding to the different applications are combined, it is still necessary to determine whether sizes of the display regions of the cards corresponding to the different applications are the same. When the sizes of the display regions of the cards corresponding to the different applications are the same, the user may combine display regions of cards corresponding to two applications by moving a display region of a card corresponding to an application to a display region of a card corresponding to the other application. For a specific manner, refer to 501 to 509. Details are not described herein again.

It may be understood that, in some implementations, after the card or the icon of the second application is dragged to the display region of the card of the first application for display, the card or the icon of the second application is displayed in the display size of the card of the first application. In addition, if the user drags the card of the second application that is already in the display region of the card of the first application out of the display region, the card of the second application is still displayed on the desktop 10 in the display size of the card of the first application. A display location of the card of the second application may be determined by a location dragged to by the user, or the card of the second application may be displayed below the display region of the card of the first application. This is not limited in this application.

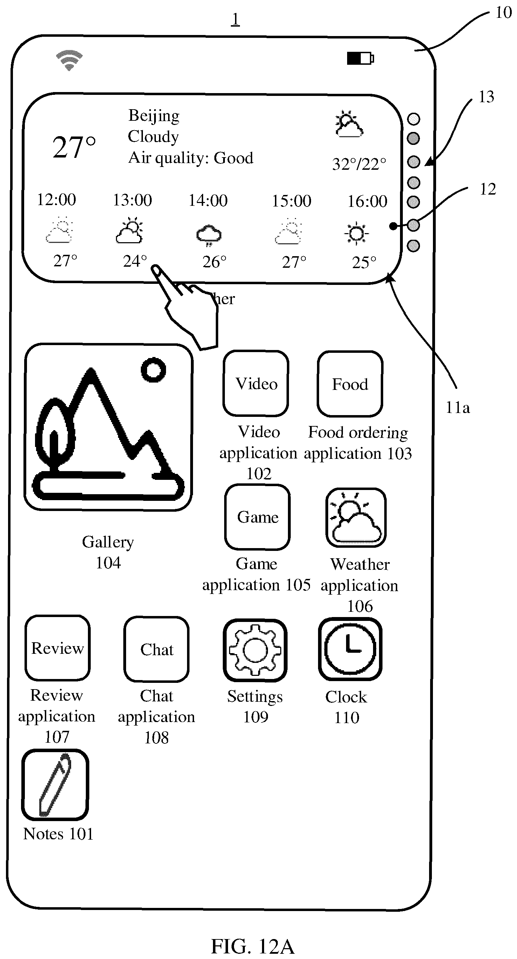

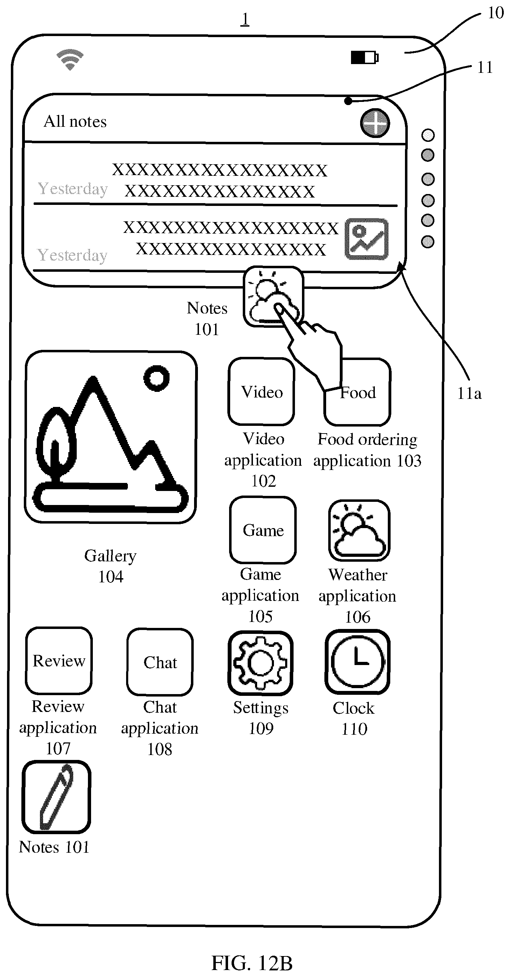

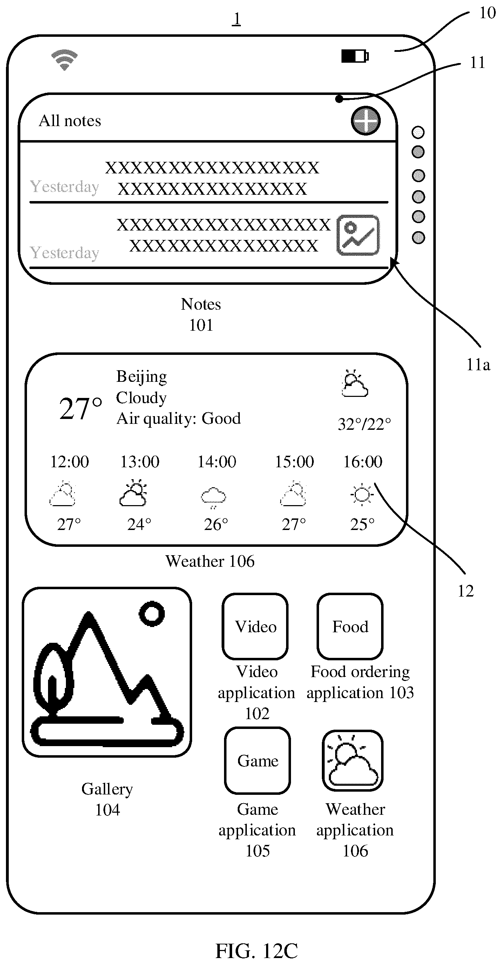

For example, as shown in FIG. 12A and FIG. 12B, the user drags the card 12 of the second application (the weather application 106) that has been displayed in the display region 11a corresponding to the card 11 of the note-taking application 101 out of the display region 11a. As shown in FIG. 12C, the card 12 of the weather application 106 is still displayed on the desktop 10 in the display size of the card of the first application.

When moving a card displayed in the display region of the card of the first application, the user may want to adjust a display location of the display region of the card of the first application. Therefore, to determine whether the user is to move the display location of the display region of the card of the first application, in some other implementations, it may be further determined whether duration of pressing or tapping the card in the display region of the card of the first application by the user exceeds the second preset duration. If the duration of pressing or tapping the card in the display region of the card of the first application by the user exceeds the second preset duration, it indicates that the user does not want to adjust the display location of the display region of the card of the first application, but wants to remove the card from the display region (that is, edit the card). In this case, the display region enters an editing state shown in FIG. 11C, so that the user removes the card in the display region. If the duration of pressing or tapping the card in the display region of the card of the first application by the user is less than the second preset duration, it indicates that the user wants to adjust the display location of the display region of the card of the first application, and in this case, the display location of the display region is adjusted in response to a user instruction of moving the display region.

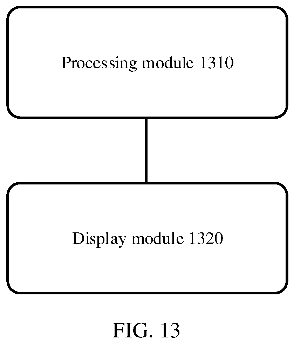

FIG. 13 is a schematic diagram of a structure of a card management apparatus according to an embodiment of this application.

As shown in FIG. 13, the apparatus includes a processing module 1310 and a display module 1320. The processing module 1310 is configured to: detect a generation instruction for generating a second card of a second application, and use a first display region for displaying a first card of a first application as a display region for both the second card of the second application and the first card of the first application.

The display module 1320 is configured to display the first card of the first application in the first display region.

In some implementations, the processing module 1310 is further configured to: detect the generation instruction for generating the second card of the second application, and control the display module 1320 to display the second card in the first display region, where the second card covers the first card for display.

In some other implementations, the first card is displayed in the first display region in a first display size, and a size of the first display region is the same as the first display size; and the processing module 1310 is further configured to: detect the generation instruction for generating the second card of the second application; then, obtain card data of the second card, where the card data of the second card includes at least one display size corresponding to the second card; determine whether the at least one display size of the second card includes the first display size; and if the at least one display size of the card of the second application includes the first display size, control the display module 1320 to display the second card of the second application in the first display region in the first display size.

In some implementations, there is correspondingly a first control in the first display region, and the first control is configured to control, according to a user instruction, to switch a card displayed in the first display region. The user instruction includes: The user switches the card in the first display region in a manner such as voice or a preset gesture. For example, the user slides downward, upward, leftward, or rightward by using an air gesture, to switch the card displayed in the first display region.

In some implementations, the processing module 1310 is further configured to: detect the instruction for generating the second card of the second application; determine whether a quantity of cards included in the first display region exceeds a preset quantity; and if the quantity of cards included in the first display region is less than the preset quantity, use the first display region as the display region for both the second card of the second application and the first card of the first application. In some implementations, the generation instruction is generated after an operation of moving an icon or a card of the second application to the first display region is detected. In some other implementations, the generation instruction is generated after an operation of moving an icon or a card of the second application to a preset region corresponding to the first display region is detected.

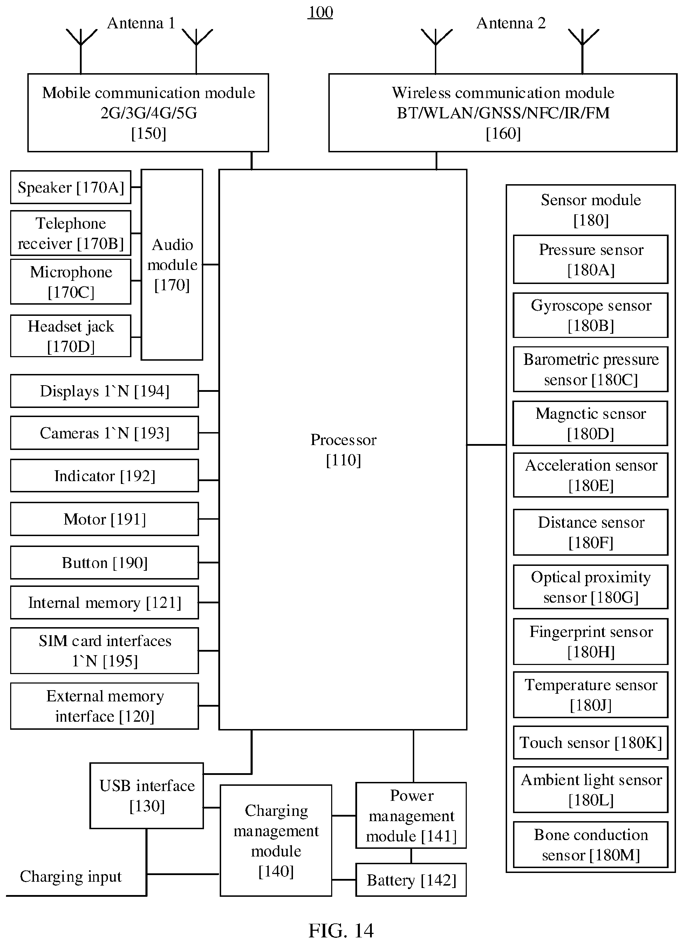

In some implementations, the processing module 1310 detects the generation instruction when detecting that time of stay of the icon or the card corresponding to the second application in the first display region or the preset region corresponding to the first display region exceeds first preset duration. It may be understood that the foregoing modules may be implemented in a software or hardware manner. For example, as an example of hardware, the processing module 1310 may be a processor shown in FIG. 14, and the display module 1320 may be a display shown in FIG. 14. This is not limited in this application.

FIG. 14 is a schematic diagram of a hardware structure of an electronic device according to an embodiment of this application.

For example, FIG. 14 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, some components may be combined, some components may be split, or different components may be disposed. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and command center of the electronic device 100. The controller may generate an operation control signal based on an instruction operation code and a timing signal, to control instruction fetching and instruction execution.

A memory may further be disposed in the processor 110, to store instructions and data. In some embodiments, the memory in the processor 110 is a cache. The memory may store instructions or data that is recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency. In some implementations, the processor 110 is configured to control, according to a detected instruction for generating a second card of a second application, to display the second card in a display region corresponding to a first card of a first application. In some implementations, the processor 110 may be configured to perform the foregoing methods 501 to 509.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). The I2S interface may be used for audio communication. The PCM interface may also be used for audio communication, to sample, quantize, and encode an analog signal. The UART interface is a universal serial data bus used for asynchronous communication. The bus may be a bidirectional communication bus. The bus converts to-be-transmitted data between serial communication and parallel communication.

The MIPI interface may be configured to connect the processor 110 and peripheral devices such as the display 194 and the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 and the display 194 communicate with each other by using the DSI interface, to implement a display function of the electronic device 100.

It may be understood that an interface connection relationship between the modules that is shown in this embodiment of this application is merely an example for description, and constitutes no limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive charging input from the charger. The power management module 141 is configured to connect the battery 142 and the charging management module 140 to the processor 110. A wireless communication function of the electronic device 100 may be implemented by using the antenna 1, the antenna 2, the mobile communication module 150, the wireless communication module 160, the modem processor, the baseband processor, and the like. The mobile communication module 150 may provide a solution for wireless communication including 2G/3G/4G/5G and the like applied to the electronic device 100. The wireless communication module 160 may provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100.

The electronic device 100 implements a display function by using the GPU, the display 194, the application processor, and the like. The GPU is a microprocessor for image processing, and is connected to the display 194 and the application processor. The GPU is configured to perform mathematical and geometric calculation for graphics rendering. The processor 110 may include one or more GPUs that execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLed, a MicroLed, a Micro-OLED, a quantum dot light emitting diode (quantum dot light emitting diodes, QLED), and the like. In some embodiments, the electronic device 100 may include one or N displays 194, where N is a positive integer greater than 1. In some implementations of this application, the display 194 is configured to display icons of the foregoing applications, a card (a first card) corresponding to a first application, and a card (a second card) corresponding to a second application.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera by using a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a shooting scene. In some embodiments, the ISP may be disposed in the camera 193.

The camera 193 is configured to capture a still image or a video. An optical image is generated for an object by using the lens and is projected onto the photosensitive element. In some embodiments, the electronic device 100 may include 1 or N cameras 193, where N is a positive integer greater than 1.

The digital signal processor is configured to process a digital signal. In addition to processing a digital image signal, the digital signal processor can further process another digital signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of encoding formats, such as moving picture experts group (moving picture experts group, MPEG)1, MPEG2, MPEG3, and MPEG4.

The NPU is a neural-network (neural-network, NN) computing processor. By referring to a biological neural-network structure, for example, by referring to a transfer mode between human brain neurons, the NPU quickly processes input information, and can further continuously perform self-learning. Applications such as intelligent cognition of the electronic device 100, for example, image recognition, face recognition, speech recognition, and text understanding, may be implemented by using the NPU.

The external memory interface 120 may be configured to connect to an external storage card, for example, a Micro SD card, to expand a storage capability of the electronic device 100. The external storage card communicates with the processor 110 through the external memory interface 120, to implement a data storage function, for example, to store files such as music and a video in the external storage card.

The internal memory 121 may be configured to store computer-executable program code, and the executable program code includes instructions. The processor 110 executes various function applications and data processing of the electronic device 100 by running the instructions stored in the internal memory 121. The internal memory 121 may include a program storage area and a data storage area. The program storage area may store an operating system, an application required by at least one function (for example, a sound playback function or an image playback function), and the like. The data storage area may store data (such as audio data and a phone book) and the like created during use of the electronic device 100. In addition, the internal memory 121 may include a high-speed random access memory, and may further include a nonvolatile memory, for example, at least one disk storage device, a flash memory device, or a universal flash storage (universal flash storage, UFS).

The electronic device 100 may implement audio functions such as music playing and sound recording by using the audio module 170, the speaker 170A, the telephone receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode audio signals. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device 100 may be configured to listen to music or answer a call in a hands-free mode by using the speaker 170A.

The telephone receiver 170B, also referred to as an "earpiece", is configured to convert an audio electrical signal into a sound signal. When a call is answered or audio information is listened to by using the electronic device 100, the telephone receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may be disposed in the electronic device 100, to collect a sound signal, implement noise reduction, and identify a sound source, so as to implement a directional recording function and the like.

The headset jack 170D is configured to be connected to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. The gyroscope sensor 180B may be configured to determine a moving posture of the electronic device 100. The barometric pressure sensor 180C is configured to measure barometric pressure. In some embodiments, the electronic device 100 calculates an altitude by using a barometric pressure value measured by the barometric pressure sensor 180C, to assist in positioning and navigation. The magnetic sensor 180D includes a Hall sensor. The acceleration sensor 180E may detect magnitudes of acceleration of the electronic device 100 in all directions (generally in three axes), and may detect a magnitude and a direction of gravity when the electronic device 100 is still. The acceleration sensor 180E may be further configured to identify a posture of the electronic device, and is applied to applications such as switching between a landscape mode and a portrait mode and a pedometer. The distance sensor 180F is configured to measure a distance. The electronic device 100 may measure a distance in an infrared manner or a laser manner. The optical proximity sensor 180G may include, for example, a light-emitting diode (LED) and a light detector such as a photodiode. The light-emitting diode may be an infrared light-emitting diode. The ambient light sensor 180L is configured to sense brightness of ambient light. The electronic device 100 may adaptively adjust brightness of the display 194 based on sensed brightness of ambient light. The fingerprint sensor 180H is configured to collect a fingerprint. The electronic device 100 may implement fingerprint unlocking, application lock accessing, fingerprint-based photographing, fingerprint-based call answering, and the like by using a feature of the collected fingerprint. The temperature sensor 180J is configured to detect temperature. In some embodiments, the electronic device 100 performs a temperature handling policy based on the temperature detected by the temperature sensor 180J. The touch sensor 180K is also referred to as a "touch panel". The touch sensor 180K may be disposed on the display 194. The touch sensor 180K and the display 194 form a touchscreen, which is also referred to as "touch control screen". The bone conduction sensor 180M may obtain a vibration signal. The button 190 includes a power on/off button, a volume button, and the like. The button 190 may be a mechanical button, or may be a touch button. The electronic device 100 may receive a key input and generate a key signal input related to user settings and function control of the electronic device 100. The motor 191 may generate a vibration prompt. The motor 191 may be configured to provide a vibration prompt for an incoming call, and may also be configured to provide vibration feedback for a touch. The indicator 192 may be an indicator light, may be configured to indicate a charging state or a power change, and may be further configured to indicate a message, a missed call, a notification, and the like. The SIM card interface 195 is configured to be connected to a SIM card.

A possible hardware structure of the electronic device 100 is described above. It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different components may be disposed. The components shown in the figure may be implemented by using hardware, software, or a combination of software and hardware.

An embodiment of this application further provides an electronic device. The electronic device includes at least one processor, a memory, and a computer program that is stored in the memory and that can run on the at least one processor. The processor implements the steps in the foregoing method embodiments when executing the computer program.

An embodiment of this application further provides a computer-readable storage medium. The computer-readable storage medium stores a computer program, and when the computer program is executed by a processor, the steps in the foregoing method embodiments may be implemented.

An embodiment of this application provides a computer program product. When the computer program product runs on a terminal device or an electronic device, the terminal device or the electronic device is enabled to perform the steps in the foregoing method embodiments.

When the integrated unit is implemented in the form of the software functional unit and sold or used as an independent product, the integrated unit may be stored in a computer-readable storage medium. Based on such an understanding, in this application, all or a part of the processes in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, some intermediate forms, or the like. The computer-readable medium may include at least any entity or apparatus capable of adding computer program code to a photographing apparatus/terminal device, a recording medium, a computer memory, a read-only memory (read-only memory, ROM), a random access memory (random access memory, RAM), an electrical carrier signal, a telecommunications signal, and a software distribution medium, for example, a USB flash drive, a removable hard disk, a magnetic disk, or an optical disc. In some jurisdictions, under legislation and patent practice, a computer-readable medium cannot be an electrical carrier signal or a telecommunications signal.

In the foregoing embodiments, descriptions of the embodiments have respective focuses. For a part that is not detailed or described in an embodiment, refer to related descriptions in other embodiments.

Persons of ordinary skill in the art may recognize that the units and algorithm steps of the examples described with reference to embodiments disclosed herein can be implemented by using electronic hardware or a combination of computer software and electronic hardware. Whether these functions are implemented in a hardware or software manner depends on a specific application and a design constraint of a technical solution. Persons skilled in the art may use different methods to implement the described functions for each particular application, but it should not be considered that the implementation goes beyond the scope of this application.

In the embodiments provided in this application, it should be understood that the disclosed apparatus/network device and method may be implemented in another manner. For example, the described apparatus/network device embodiment is merely an example. For example, division of the modules or units is merely logical function division. In actual implementation, there may be another division manner. For example, a plurality of units or components may be combined or integrated into another system, or some characteristics may be ignored or not performed. In addition, the displayed or discussed mutual coupling, direct coupling, or communication connection may be implemented through some interfaces, and indirect coupling or a communication connection of the apparatuses or units may be in an electrical, mechanical, or another form.

The units described as separate components may or may not be physically separated, and components displayed as units may or may not be physical units, that is, may be located in one place, or may be distributed on a plurality of network units. Some or all of the units may be selected based on actual requirements to achieve the objectives of the solutions in the embodiments.

In the following descriptions, specific details such as a specific system structure and a technology are proposed for description rather than limitation, to thoroughly understand embodiments of this application. However, persons skilled in the art should understand that this application may also be implemented in another embodiment without these specific details. In other cases, detailed descriptions about a well-known system, apparatus, circuit, and method are omitted to prevent unnecessary details from obscuring the description of this application.

It should be understood that when being used in this specification and the appended claims of this application, the term "include" indicates presence of a described characteristic, entirety, step, operation, element and/or component, but does not rule out presence or addition of one or more other characteristics, entireties, steps, operations, elements, components and/or sets thereof.

It should also be understood that the term "and/or" used in this specification and the appended claims of this application means any combination and all possible combinations of one or more of listed associated items, and these combinations are included.

As used in this specification and the appended claims of this application, the term "if" may be interpreted according to the context as "when...", "once", "determining in response to", or "detecting in response to". Similarly, the phrase "if it is determined that" or "if [a described condition or event] is detected" may be interpreted according to the context as "once it is determined that", "it is determined that in response to", "once [a described condition or event] is detected", or "[a described condition or event] is detected in response to".

In addition, in the descriptions of this specification and the appended claims of this application, the terms "first", "second", "third", and the like are merely used to distinguish between the descriptions, and cannot be understood as indicating or implying relative importance.

Referring to "one embodiment", "some embodiments", or the like that is described in this specification of this application means that specific characteristics, structures, or features described with reference to one or more embodiments are included in the one or more embodiments of this application. Therefore, the statements "in one embodiment", "in some embodiments", "in some other embodiments", "in some other embodiments", and the like that appear in different parts of this specification are not necessarily referred to a same embodiment, but mean "one or more but not all embodiments", unless otherwise specifically emphasized. The terms "include", "comprise", "have", and variations thereof all mean "include but be not limited to" unless otherwise specified in another manner.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application, and shall fall within the protection scope of this application defined by the appended claims.

## Claims

1. A card display method, applied to an electronic device and comprising:
displaying a first card of a first application in a first display region of the electronic device, wherein the first card has a first size;
detecting a first operation of a user for a second card of a second application, wherein the second card has a second size, and the second size is different from the first size; and
stacking and displaying a third card of the second application and the first card in the first display region in response to the first operation, wherein the third card has the first size, and content displayed on the third card is different from content displayed on the second card,
the method further comprising:
detecting a second operation of the user for an icon of a third application; wherein the second operation comprises: dragging the icon of the third application to the first display region or a preset region corresponding to the first display region, with time of stay exceeding first preset duration; and
stacking and displaying the fourth card of the third application, the third card, and the first card in the first display region in response to the second operation, wherein the fourth card has the first size; wherein the fourth card covers the third card for display.

2. The method according to claim 1, wherein the third card covers the first card for display.

3. The method according to claim 1, wherein the first display region is a region on a desktop of the electronic device; and
the third card of the second application and/or the icon of the third application are/is located on the desktop.

4. The method according to any one of claims 1 to 3, further comprising:
keeping displaying the icon of the third application on the desktop of the electronic device.

5. The method according to any one of claims 1 to 4, further comprising:
stopping displaying the second card of the second application on the desktop of the electronic device.

6. The method according to claim 1, further comprising:
displaying prompt information when the first operation or the second operation is detected and a quantity of cards comprised in the first display region is equal to a preset quantity or the second application or the third application does not support the first size, wherein the prompt information indicates that a card cannot be added.

7. The method according to claim 1, wherein the fourth card, the third card, and the first card are arranged in sequence from top to bottom in the first display region.

8. The method according to claim 7, wherein the first display region comprises a first control, and the method further comprises:
detecting a third operation of the user for the first control; and
switching a first one of a plurality of cards displayed in the first display region from the fourth card to the third card in response to the third operation.

9. The method according to claim 1, further comprising:
detecting a fourth operation of the user for the fourth card; and
adjusting a sequence of the first card, the fourth card, and the third card based on a location of the fourth card in the first display region in response to the fourth operation;
wherein the adjusting a sequence of the first card, the fourth card, and the third card based on a location of the fourth card in the first display region in response to the fourth operation comprises:
dragging the fourth card to move toward the third card in the first display region or a preset region corresponding to the first display region; and
exchanging locations of the fourth card and the third card if the fourth card and the third card meet a first condition, wherein that the fourth card and the third card meet the first condition comprises:
a center point of the fourth card overlaps any point in the third card, and time of stay of the fourth card exceeds second preset duration.

10. The method according to claim 5, further comprising:
detecting a fifth operation of the user for the third card; and
displaying the second card of the second application on the desktop of the electronic device in response to the fifth operation, and stopping displaying the second card in the first display region;
wherein the fifth operation comprises:
dragging the third card to a desktop outside the first display region.

11. The method according to claim 3, wherein the first display region is a region on a first desktop of the electronic device; and
the third card of the second application and/or the icon of the third application are/is located on a second desktop of the electronic device, wherein mutual switching between the first desktop and the second desktop is supported.

12. An electronic device, comprising a display, one or more processors and one or more memories, wherein the one or more memories store one or more programs, and when the one or more programs are executed by the one or more processors, the electronic device carry out the method according to any one of claims 1 to 11.

13. A computer-readable storage medium, wherein the storage medium stores instructions, and when the instructions are executed on a computer, the computer carry out the method according to any one of claims 1 to 11.

## Patentansprüche

1. Ein Kartendarstellungsverfahren, angewendet auf ein elektronisches Gerät, umfassend:
Anzeigen einer ersten Karte einer ersten Anwendung in einem ersten Anzeigebereich des elektronischen Geräts, wobei die erste Karte eine erste Größe aufweist;
Erkennen einer ersten Benutzeraktion für eine zweite Karte einer zweiten Anwendung, wobei die zweite Karte eine zweite Größe aufweist und die zweite Größe sich von der ersten Größe unterscheidet; und
Stapeln und Anzeigen einer dritten Karte der zweiten Anwendung sowie der ersten Karte im ersten Anzeigebereich als Reaktion auf die erste Benutzeraktion, wobei die dritte Karte die erste Größe aufweist und sich die auf der dritten Karte angezeigten Inhalte von den auf der zweiten Karte angezeigten Inhalten unterscheiden,
wobei das Verfahren weiterhin Folgendes umfasst:
Erkennen einer zweiten Benutzeraktion bezüglich eines Symbols einer dritten Anwendung; wobei die zweite Aktion Folgendes umfasst: Ziehen des Symbols der dritten Anwendung in den ersten Anzeigebereich oder einen dem ersten Anzeigebereich zugeordneten voreingestellten Bereich, wobei die Verweildauer eine erste voreingestellte Zeitspanne überschreitet; und
Stapeln und Anzeigen der vierten Karte der dritten Anwendung, der dritten Karte und der ersten Karte im ersten Anzeigebereich als Reaktion auf die zweite Aktion, wobei die vierte Karte die erste Größe aufweist; wobei die vierte Karte die dritte Karte zur Anzeige abdeckt.

2. Verfahren nach Anspruch 1, wobei die dritte Karte die erste Karte zur Anzeige abdeckt.

3. Verfahren nach Anspruch 1, wobei der erste Anzeigebereich ein Bereich auf einem Desktop des elektronischen Geräts ist; und
die dritte Karte der zweiten Anwendung und/oder das Symbol der dritten Anwendung sich auf dem Desktop befinden/befindet.

4. Verfahren nach einem der Ansprüche 1 bis 3, weiterhin umfassend:
das Symbol der dritten Anwendung weiterhin auf dem Desktop des elektronischen Geräts anzeigen.

5. Verfahren nach einem der Ansprüche 1 bis 4, weiterhin umfassend:
das Anzeigen der zweiten Karte der zweiten Anwendung auf dem Desktop des elektronischen Geräts beenden.

6. Verfahren nach Anspruch 1, weiterhin umfassend:
Anzeigen von Hinweisinformationen, wenn die erste oder die zweite Aktion erkannt wird und die Anzahl der im ersten Anzeigebereich enthaltenen Karten gleich einer voreingestellten Anzahl ist oder die zweite oder die dritte Anwendung die erste Größe nicht unterstützt, wobei die Hinweisinformation angibt, dass keine weitere Karte hinzugefügt werden kann.

7. Verfahren nach Anspruch 1, wobei die vierte Karte, die dritte Karte und die erste Karte in der Reihenfolge von oben nach unten im ersten Anzeigebereich angeordnet sind.

8. Verfahren nach Anspruch 7, wobei der erste Anzeigebereich ein erstes Steuerelement umfasst, und das Verfahren weiterhin umfasst:
Erkennen einer dritten Bedienung des Benutzers für das erste Steuerelement; und
Umschalten einer ersten von mehreren Karten, die im ersten Anzeigebereich angezeigt werden, von der vierten Karte auf die dritte Karte als Reaktion auf die dritte Bedienung.

9. Verfahren nach Anspruch 1, weiterhin umfassend:
Erkennen einer vierten Bedienung des Benutzers für die vierte Karte; und
Anpassen einer Reihenfolge der ersten Karte, der vierten Karte und der dritten Karte basierend auf der Position der vierten Karte im ersten Anzeigebereich als Reaktion auf die vierte Bedienung;
wobei das Anpassen einer Reihenfolge der ersten Karte, der vierten Karte und der dritten Karte basierend auf dem Ort der vierten Karte im ersten Anzeigebereich als Reaktion auf die vierte Bedienung Folgendes umfasst:
Ziehen der vierten Karte in Richtung der dritten Karte im ersten Anzeigebereich oder einem voreingestellten Bereich, der dem ersten Anzeigebereich entspricht; und
Austauschen der Positionen der vierten Karte und der dritten Karte, wenn die vierte Karte und die dritte Karte eine erste Bedingung erfüllen, wobei das Erfüllen der ersten Bedingung umfasst:
Ein Mittelpunkt der vierten Karte überlappt einen beliebigen Punkt der dritten Karte, und die Verweildauer der vierten Karte überschreitet eine zweite voreingestellte Zeitdauer.

10. Verfahren nach Anspruch 5, weiterhin umfassend:
Erkennen einer fünften Bedienung des Benutzers für die dritte Karte; und
Anzeigen der zweiten Karte der zweiten Anwendung auf dem Desktop des elektronischen Geräts als Reaktion auf die fünfte Bedienung und Beenden der Anzeige der zweiten Karte im ersten Anzeigebereich;
wobei die fünfte Bedienung Folgendes umfasst:
Ziehen der dritten Karte auf einen Desktop außerhalb des ersten Anzeigebereichs.

11. Verfahren nach Anspruch 3, wobei der erste Anzeigebereich ein Bereich auf einem ersten Desktop des elektronischen Geräts ist; und
die dritte Karte der zweiten Anwendung und/oder das Symbol der dritten Anwendung befindet sich auf einem zweiten Desktop des elektronischen Geräts, wobei ein gegenseitiges Umschalten zwischen dem ersten Desktop und dem zweiten Desktop unterstützt wird.

12. Elektronisches Gerät, umfassend eine Anzeige, einen oder mehrere Prozessoren und einen oder mehrere Speicher, wobei die Speicher ein oder mehrere Programme speichern und, wenn die Programme von den Prozessoren ausgeführt werden, das elektronische Gerät das Verfahren gemäß einem der Ansprüche 1 bis 11 ausführt.

13. Ein computerlesbares Speichermedium, wobei das Speichermedium Anweisungen speichert und wenn die Anweisungen auf einem Computer ausgeführt werden, der Computer das Verfahren gemäß einem der Ansprüche 1 bis 11 durchführt.

## Revendications

1. Procédé d'affichage de carte, appliqué à un dispositif électronique et comprenant :
l'affichage d'une première carte d'une première application dans une première zone d'affichage du dispositif électronique, la première carte ayant une première taille ;
la détection d'une première opération d'un utilisateur pour une seconde carte d'une seconde application, cette seconde carte ayant une seconde taille, différente de la première taille ; et
la superposition et l'affichage d'une troisième carte de la seconde application et de la première carte dans la première zone d'affichage en réponse à la première opération, la troisième carte ayant la première taille, et le contenu affiché sur la troisième carte étant différent du contenu affiché sur la seconde carte,
le procédé comprenant en outre :
la détection d'une seconde opération de l'utilisateur concernant une icône d'une troisième application ; ladite seconde opération comprenant : le glissement de l'icône de la troisième application vers la première zone d'affichage ou une zone prédéfinie correspondant à la première zone d'affichage, la durée de maintien dépassant une première durée prédéfinie ; et
la superposition et l'affichage de la quatrième carte de la troisième application, de la troisième carte et de la première carte dans la première zone d'affichage en réponse à la seconde opération, la quatrième carte ayant la première taille ; la quatrième carte recouvrant la troisième carte pour l'affichage.

2. Procédé selon la revendication 1, où la troisième carte recouvre la première carte lors de l'affichage.

3. Procédé selon la revendication 1, où la première zone d'affichage est une zone sur le bureau du dispositif électronique ; et
la troisième carte de la seconde application et/ou l'icône de la troisième application se situent/se situe sur le bureau.

4. Procédé selon l'une quelconque des revendications 1 à 3, comprenant en outre :
le maintien de l'affichage de l'icône de la troisième application sur le bureau du dispositif électronique.

5. Procédé selon l'une quelconque des revendications 1 à 4, comprenant en outre :
l'arrêt de l'affichage de la seconde carte de la seconde application sur le bureau du dispositif électronique.

6. Procédé selon la revendication 1, comprenant en outre :
l'affichage d'une information d'alerte lorsque la première opération ou la seconde opération est détectée et que le nombre de cartes dans la première zone d'affichage est égal à une quantité prédéfinie ou que la seconde application ou la troisième application ne supporte pas la première taille, ladite information d'alerte indiquant qu'il est impossible d'ajouter une carte.

7. Procédé selon la revendication 1, où la quatrième carte, la troisième carte et la première carte sont disposées dans l'ordre de haut en bas dans la première zone d'affichage.

8. Le procédé selon la revendication 7, dans lequel la première région d'affichage comprend un premier contrôle, et le procédé comprend en outre :
la détection d'une troisième opération de l'utilisateur concernant le premier contrôle ; et
la commutation d'une première carte parmi une pluralité de cartes affichées dans la première région d'affichage, de la quatrième carte à la troisième carte, en réponse à la troisième opération.

9. Le procédé selon la revendication 1, comprenant en outre :
la détection d'une quatrième opération de l'utilisateur concernant la quatrième carte ; et
le réajustement de la séquence de la première carte, la quatrième carte et la troisième carte, en fonction de l'emplacement de la quatrième carte dans la première région d'affichage, en réponse à la quatrième opération ;
dans lequel le réajustement de la séquence de la première carte, de la quatrième carte et de la troisième carte sur la base de l'emplacement de la quatrième carte dans la première région d'affichage en réponse à la quatrième opération comprend :
faire glisser la quatrième carte afin de la déplacer vers la troisième carte dans la première région d'affichage ou dans une région prédéfinie correspondant à la première région d'affichage ; et
échanger les emplacements de la quatrième carte et de la troisième carte si la quatrième carte et la troisième carte remplissent une première condition, ladite première condition étant :
le point central de la quatrième carte chevauche n'importe quel point sur la troisième carte, et le temps de maintien de la quatrième carte dépasse une deuxième durée prédéfinie.

10. Le procédé selon la revendication 5, comprenant en outre :
la détection d'une cinquième opération de l'utilisateur concernant la troisième carte ; et
l'affichage de la deuxième carte de la deuxième application sur le bureau de l'appareil électronique en réponse à la cinquième opération, et l'arrêt de l'affichage de la deuxième carte dans la première région d'affichage ;
dans lequel la cinquième opération comprend :
faire glisser la troisième carte vers un bureau en dehors de la première région d'affichage.

11. Le procédé selon la revendication 3, dans lequel la première région d'affichage est une région sur un premier bureau de l'appareil électronique ; et
la troisième carte de la deuxième application et/ou l'icône de la troisième application sont/sont localisés sur un second bureau de l'appareil électronique, dans lequel la commutation mutuelle entre le premier bureau et le deuxième bureau est prise en charge.

12. Un appareil électronique, comprenant un écran, un ou plusieurs processeurs et une ou plusieurs mémoires, dans lequel la ou les mémoires stockent un ou plusieurs programmes, et lorsque le ou les programmes sont exécutés par le ou les processeurs, l'appareil électronique met en œuvre le procédé selon l'une quelconque des revendications 1 à 11.

13. Un support de stockage lisible par ordinateur, ledit support de stockage stockant des instructions, et lorsque les instructions sont exécutées sur un ordinateur, l'ordinateur met en œuvre le procédé selon l'une quelconque des revendications 1 à 11.
